# EUROPEAN PATENT APPLICATION

(11) **EP 4 631 900 A1**
(43) Date of publication of application: **15.10.2025**
(21) Application number: 25160066.4
(22) Date of filing: 25.02.2025
(51) Int. Cl.: B65H 49/38, B65H 75/28, H01B 13/012

(54) **WIRE CARRIER, END EFFECTOR AND METHOD FOR TRANSPORTING WIRES**

(30) Priority: 12.04.2024 US 202418634190
(71) Applicant: The Boeing Company, Arlington, VA 22202 (US)
(72) Inventor: MCCASKEY, JEFFREY A., Arlington, 22202 (US); BARLETTA, ALDO M., Arlington, 22202 (US); MOHLMAN, SHAWN D., Arlington, 22202 (US); MITCHELL, BRADLEY J., Arlington, 22202 (US); BLACKEN, LARS E., Arlington, 22202 (US); ROGERS, RYAN P., Arlington, 22202 (US)
(74) Representative: Sandri, Sandro

(57) **Abstract**

A wire carrier (100) for transporting a wire (102) includes a support structure (104), a coil holder (108), a first end holder (118) and a second end holder (120). An end effector (1000) for transporting the wire includes a support structure (1002), a first retaining device (1006), a second retaining device (1008), a third retaining device (1010) and an interface member (1104). A method for transporting the wire includes transporting the wire from a wire preparation system (804) to a wire assembly system (806) using a wire carrier on a wire transport system (802). The wire includes first (114) and second (116) ends. The wire preparation system formed the wire in a coil with a breakout length (302) between the coil and the first end and another breakout length (304) between the coil and the second end. The method also includes transferring the coil with the first and second ends from the wire carrier on the wire transport system to the wire assembly system using an electromechanical manipulator (808, 810).

## Description

### FIELD

The present disclosure relates generally to techniques for transporting wires and, particularly, to the use of wire carriers and end effectors to transfer and transport the wires. The various techniques include transferring wires from a wire preparation system to a wire transport system, transporting the wires to a wire assembly system via the wire transport system and transferring the wires from the wire transport system to the wire assembly system.

### BACKGROUND

Commercial practices for wire harness manufacturing have not changed substantially since the 1960s. With regard to raceway wiring, individual wires are prepared, terminated into first-end connectors, formed into individual harnesses, terminated into second-end connectors and assembled as bundles onto raceway supports. The raceway supports are transported to the factory and installed in an end item, such as an airplane. Moreover, this process currently may take 45 person-days. Moreover, the current process includes many non-value-added steps related to packaging, shipping, receiving and un-packaging. The process may also result in a significant amount of work-in-process buffers due to scarce resources and/or long lead items.

Electrical wiring raceways include a large number of electrical wires running down the length of an end item to distribute data, signals and power throughout the end item. For example, airplanes typically have 4 to 5 raceways running the length of the airplane. The raceways are physically separated from each other to mitigate against physical threats, such as engine blade out or bomb blast.

A raceway is traditionally assembled using the following process. Long wire bundles are assembled, tested, coiled, packaged and shipped to an electrical system responsibility center. Third parties may assemble these wire bundles. The electrical system responsibility center receives the bundles, uncoils them and assembles them together with other similar bundles on long assembly tables. The bundles are tied and/or clamped together and attached to spanner bar substructures. These long assemblies are then coiled onto transport tools and transported to the end item assembly factory. At the end item assembly factory, the assemblies are uncoiled, carried into the end item, lifted and installed. End items, such as airplanes, may use an exceptionally large transport tool to avoid the coiling, uncoiling and lifting tasks. Traditional raceway assemblies are based on end item production lines.

Existing raceways, wiring harnesses and bundles may include wires that range from about 0.60 m (24 inches) to 30.48 m (100 feet). Current techniques for assembling such wires in a raceway require a substantial amount of manual manipulation. For example, there are no known solutions for autonomously managing wire length variability.

Accordingly, those skilled in the art continue with research and development efforts to improve techniques for autonomous preparation of wire and autonomous transport of wire prepared autonomously and/or with manual manipulation.

### SUMMARY

Disclosed are examples of wire carriers, end effectors and methods for transporting wires. The following is a non-exhaustive list of examples, which may or may not be claimed, of the subject matter according to the present disclosure.

In an example, a wire carrier for transporting a wire includes a support structure, a first coil holder, a first end holder and a second end holder. The support structure includes a front side and a rear side. The first coil holder secured to the front side of the support structure at a first location corresponding to a coil of the wire and a first position on the coil between a first end of the wire and a second end of the wire. The first end holder secured to the front side of the support structure at a second location corresponding to the first end of the wire. The second end holder secured to the front side of the support structure at a third location corresponding to the second end.

In an example, an end effector for transporting a wire includes a support structure, a first retaining device, a second retaining device, a third retaining device and an interface member. The support structure includes a front side and a rear side. The first retaining device is secured to the front side of the support structure at a first location corresponding to a coil of the wire and a first position on the coil between a first end of the wire and a second end of the wire. The second retaining device secured to the front side of the support structure at a second location corresponding to the first end of the wire. The third retaining device secured to the front side of the support structure at a third location corresponding to the second end. The interface member secured to the rear side of the support structure extending from the rear side for connection with an electro-mechanical manipulator in conjunction with control of the end effector during the transporting of the wire.

In an example, a method for transporting a wire includes i) transporting the wire from a wire preparation system to a wire assembly system using a wire carrier on a wire transport system, the wire comprising a first end and a second end, the wire preparation system having formed the wire in a coil with a first breakout length between the coil of the wire and the first end and a second breakout length between the coil and the second end; and ii) transferring the coil with the first end and the second end from the wire carrier on the wire transport system to the wire assembly system using a first electro-mechanical manipulator.

Other examples of the disclosed wire carriers, end effectors and methods for transporting wires will become apparent from the following detailed description, the accompanying drawings and the appended claims.

### BRIEF DESCRIPTION OF THE DRAWINGS

Fig. 1 is a front perspective view of an example of a wire carrier for transporting a wire, the wire carrier is holding an example of the wire;
Fig. 2 is a rear perspective view of the wire carrier of Fig. 1;
Fig. 3 is a front view of an example of a wire;
Fig. 4 is a front perspective view of an example of a first coil holder in the wire carrier of Fig. 1;
Fig. 5 is a front perspective view of an example of a first end holder in the wire carrier of Fig. 1;
Fig. 6 is a front perspective view of an example of a second end holder in the wire carrier of Fig. 1;
Fig. 7 is a front perspective view of an example of a second coil holder in the wire carrier of Fig. 1;
Fig. 8 is a functional block diagram of an example of a fabrication system for transporting the wire of Fig. 3;
Fig. 9 is a front perspective view of an example of a docking station for the wire carrier of Fig. 1;
Fig. 10 is a front perspective view of an example of an end effector for transporting a wire;
Fig. 11 is a rear perspective view of the end effector of Fig. 10;
Fig. 12 is a front perspective view of examples of a first retaining device and a fourth retaining device in the end effector of Fig. 10;
Fig. 13 is a front perspective view of examples of a second retaining device and a first key assembly in the end effector of Fig. 10;
Fig. 14 is a front perspective view of examples of a third retaining device and a second key assembly in the end effector of Fig. 10;
Fig. 15 is a flow diagram of an example of a method for transporting a wire;
Fig. 16 is a flow diagram of an example of the transferring of the coil in the method of Fig. 15;
Fig. 17 is a flow diagram of an example of the retaining of the coil of Fig. 16;
Fig. 18 is a flow diagram of an example of the retaining of the first end of Fig. 16;
Fig. 19 is a flow diagram of an example of the retaining of the second end of Fig. 16;
Fig. 20, in combination with Fig. 16, is a flow diagram of another example of the transporting of the coil in the method 1500 of Fig. 15;
Fig. 21 is a flow diagram of an example of the retaining of the coil of Fig. 20;
Fig. 22 is a flow diagram of an example of the transferring of the coil in the method 1500 of Fig. 15;
Figs. 23A-B is a flow diagram of an example of the picking of the coil of Fig. 22;
Fig. 24 is a flow diagram of an example of the picking of the first end of Fig. 23;
Fig. 25 is a flow diagram of an example of the picking of the second end of Fig. 23;
Fig. 26, in combination with Figs. 23A-B, is a flow diagram of another example of the picking of the coil of Fig. 22;
Fig. 27 is a flow diagram of an example of the placing of the coil of Fig. 22;
Fig. 28 is a flow diagram of an example of the transferring of the coil in the method 1500 of Fig. 15;
Figs. 29A-B is a flow diagram of an example of the picking of the coil of Fig. 28;
Fig. 30 is a flow diagram of an example of the placing of the coil of Fig. 28;
Fig. 31 is a flow diagram of an example of the placing of the first end of Fig. 30;
Fig. 32 is a flow diagram of an example of the placing of the second end of Fig. 30;
Fig. 33, in combination with Fig. 30, is a flow diagram of another example of the placing of the coil of Fig. 28;
Fig. 34 is a flow diagram of another example of the transferring of the coil in the method 1500 of Fig. 15;
Figs. 35A-B is a flow diagram of an example of the receiving of the coil of Fig. 34;
Fig. 36 is a block diagram of aircraft production and service methodology that implements one or more of the examples of methods for transporting a wire disclosed herein; and
Fig. 37 is a schematic illustration of an aircraft that incorporates a raceway architecture that was assembled using one or more of the examples of wire carriers, end effectors and methods for transporting wires disclosed herein.

### DETAILED DESCRIPTION

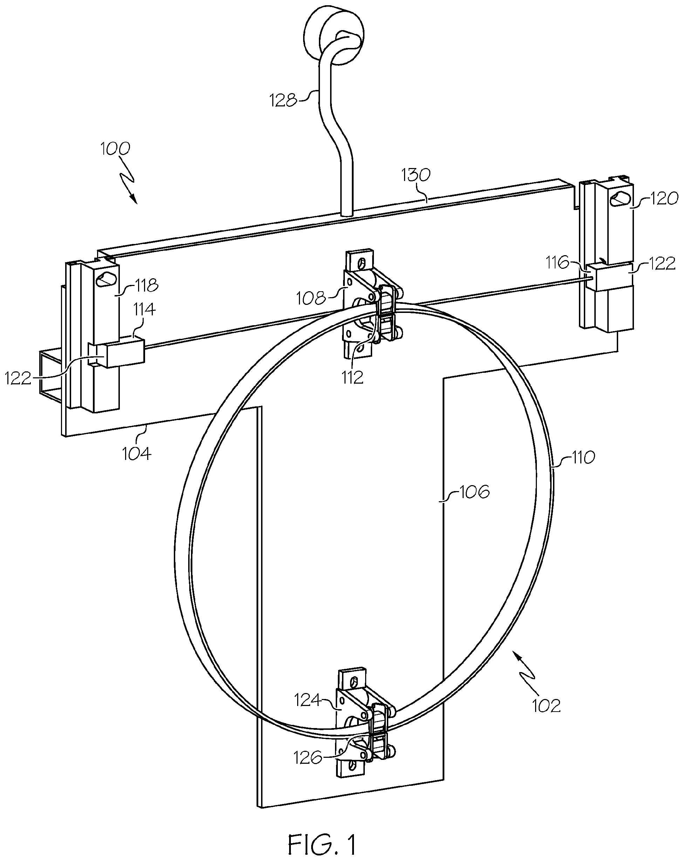

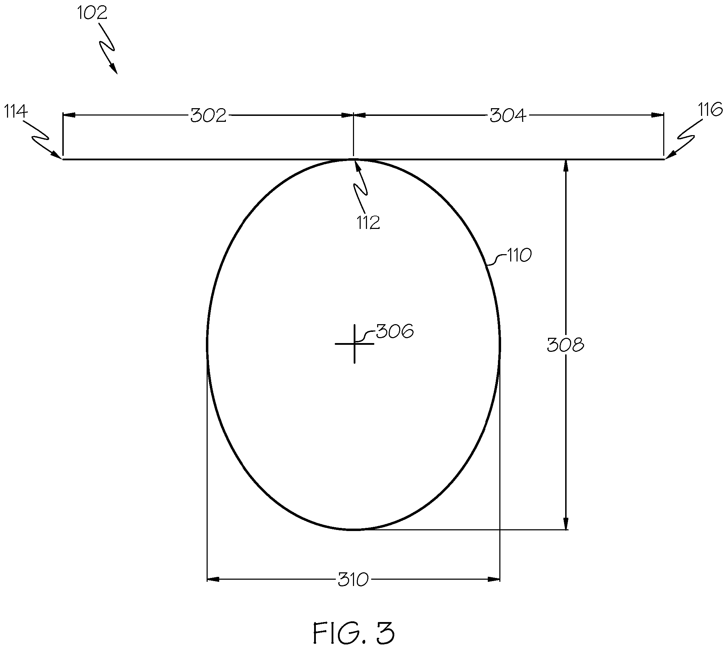

The various examples of wire carriers 100, end effectors 1000 and methods 1500 for transporting a wire 102 disclosed herein provide techniques for automated handling of wires 102 of variable lengths. For example, the wire 102 may be looped in a coil 110 with the first end 114 and second end 116 of the wire 102 held in a consistent position relative to the coil 110 (see, e.g., Figs. 1 and 3) at a wire preparation system 804. Four places are identified to provide for consistent handling: i) a first end holder 118 to hold the first end 114 of the wire 102, ii) a second end holder 120 to hold the second end 116, iii) a first coil holder 108 to hold a first portion of the coil 110 of the wire 102, which will be centered between the first end holder 118 and the second end holder 120 and iv) an optional second coil holder 124 to hold a second portion of the coil 110, which will be on the opposite side of the coil 110 from the first coil holder 108.

The first end holder 118 and second end holder 120 may be clamps, for example, that clamp onto the end of the wire, some device terminated to the end of the wire, or some consistent point along the length of the wire relative to the end of the wire. These end holders may have two states: opened or gripped. "Opened" means that the holder is not holding the end of the wire. "Gripped" means that the holder is holding the end of the wire such that it cannot easily come out of the holder.

The first coil holder 108 and second coil holder 124 may be clamps, for example, which wrap around the coil 110 of the wire 102. These loop holders may have three states: opened, loosely closed and gripped. "Opened" means that wires may pass in or out of the holder. "Loosely closed" means that the holder is closed enough that the wires cannot come out, but that they can still slide through the holder. "Gripped" means that the holder is clamped down on the wires such that they cannot easily slide through the holder.

Variation in wire length is accommodated by the shape of the coil 110 of the wire 102 in that at least some of the loops will usually be non-circular. The distance between the first end holder 118 and the first coil holder 108 may be consistent with the distance between the second end holder 120 and first coil holder 108. These distances are called breakout lengths 302, 304.

Notably, the following five positions can all be consistently located relative to each other, regardless of wire length, assuming that the wire 102 is long enough to make at least one loop: i) first end holder 118, ii) second end holder 120, iii) first coil holder 108, iv) second coil holder 124, and v) a central area 306 of the coil 110. Length variation is accommodated by varying the width of at least one loop in the coil 110.

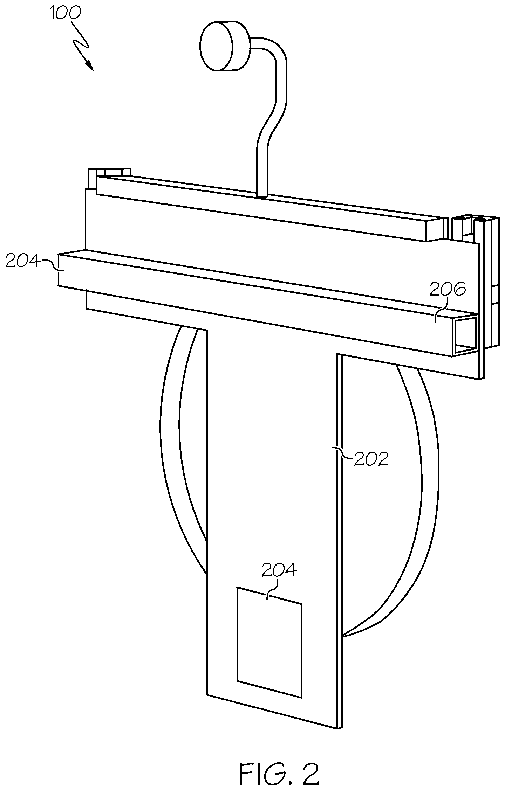

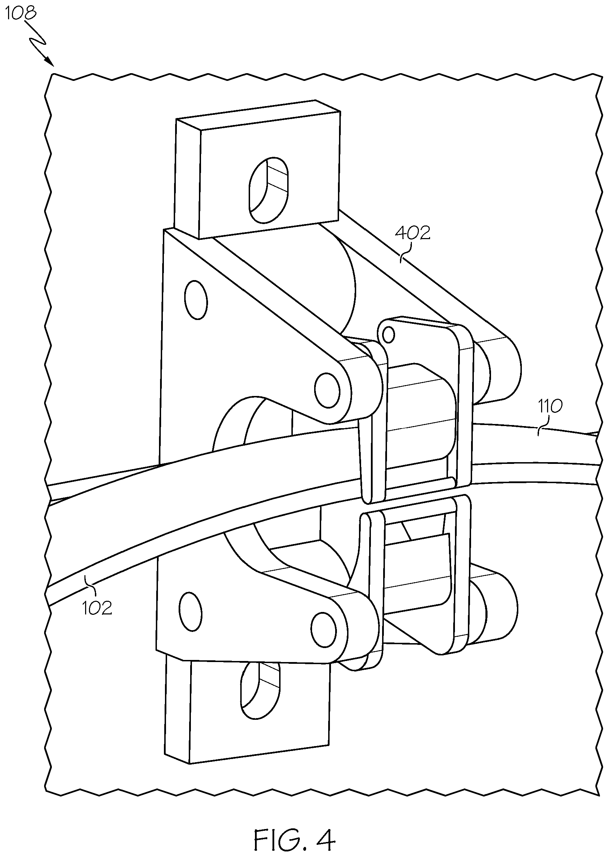

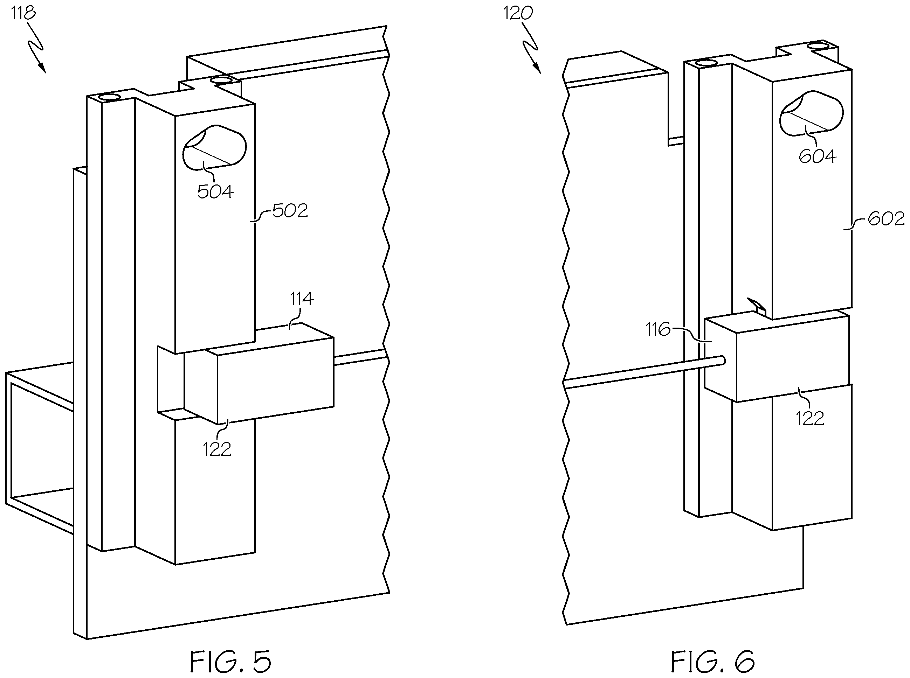

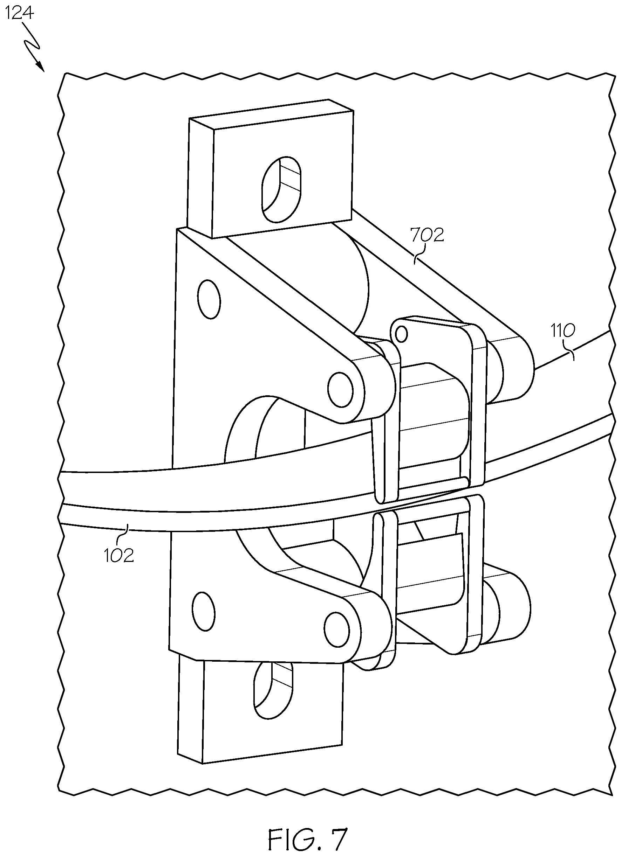

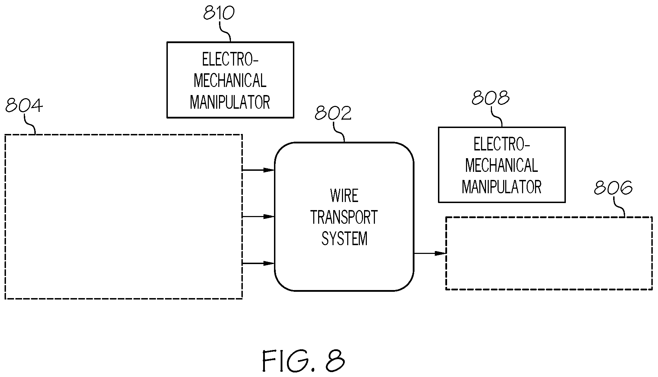

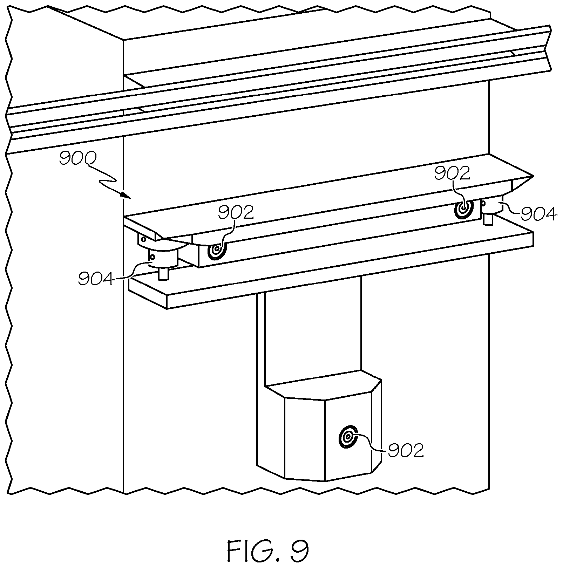

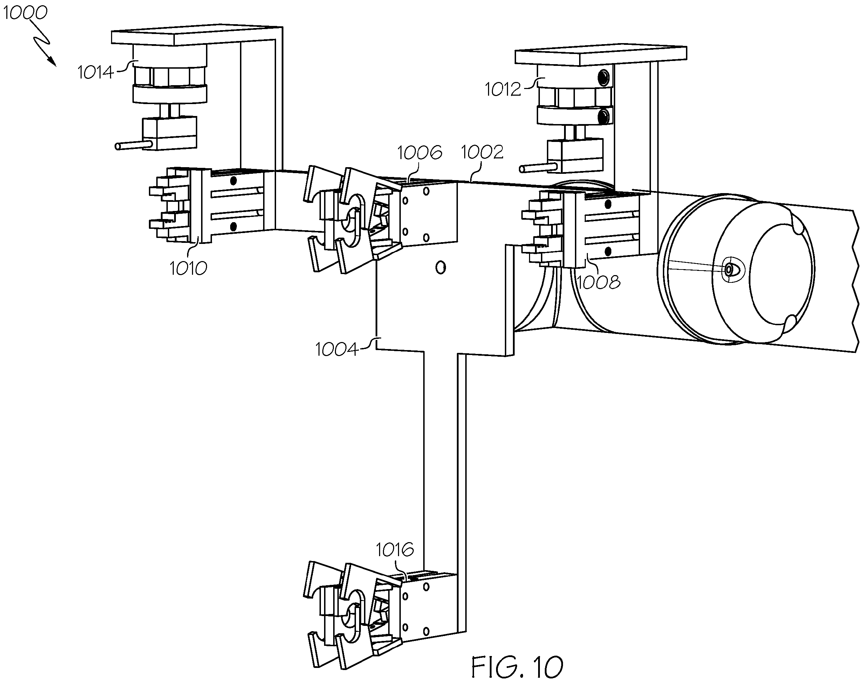

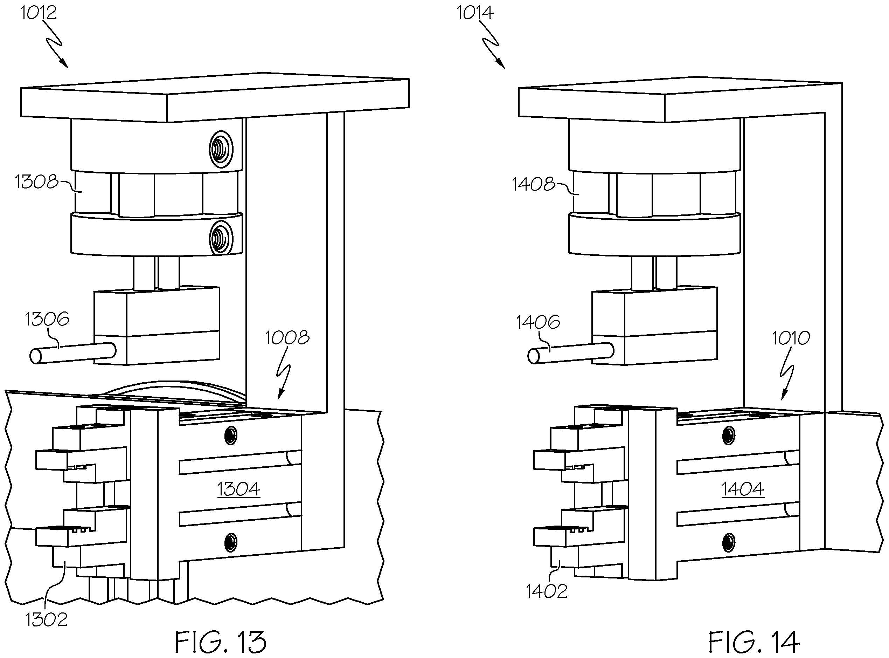

Referring generally to Figs. 1-10, 13 and 14, by way of examples, the present disclosure is directed to a wire carrier 100 for transporting a wire 102. Fig. 1 shows an example of the wire carrier 100 holding an example of the wire 102. Fig. 2 shows a rear perspective view of the wire carrier 100 of Fig. 1. Fig. 3 shows an example of the wire 102. Fig. 4 shows an example of a first coil holder 108 in the wire carrier 100 of Fig. 1. Fig. 5 shows an example of a first end holder 118 in the wire carrier 100 of Fig. 1. Fig. 6 shows an example of a second end holder 120 in the wire carrier of Fig. 1. Fig. 7 shows an example of a second coil holder 124 in the wire carrier of Fig. 1. Fig. 8 provides a functional block diagram of an example of a fabrication system for transporting the wire of Fig. 3. Fig. 9 shows an example of a docking station 900 for the wire carrier 100 of Fig. 1. Fig. 10 shows an example of an end effector 1000 for transporting a wire 102. Fig. 13 shows examples of a second retaining device 1008 and a first key assembly 1012 in the end effector 1000 of Fig. 10. Fig. 14 shows examples of a third retaining device 1010 and a second key assembly 1014 in the end effector 1000 of Fig. 10.

With reference again to Figs. 1-10, 13 and 14, in one or more examples, a wire carrier 100 for transporting a wire 102 includes a support structure 104, a first coil holder 108, a first end holder 118 and a second end holder 120. The support structure 104 includes a front side 106 and a rear side 202. The first coil holder 108 is secured to the front side 106 of the support structure 104 at a first location corresponding to a coil 110 of the wire 102 and a first position 112 on the coil 110 between a first end 114 of the wire 102 and a second end 116 of the wire 102. The first end holder 118 is secured to the front side 106 of the support structure 104 at a second location corresponding to the first end 114 of the wire 102. The second end holder 120 is secured to the front side 106 of the support structure 104 at a third location corresponding to the second end 116.

In another example of the wire carrier 100, the wire 102 includes a single conductor, a twisted pair of conductors, a multiconductor cable, a shielded cable, an unjacketed cable, a coaxial cable, a matched-impedance cable, a fiber optic cable or any other suitable wire in any suitable combination. In yet another example of the wire carrier 100, the first coil holder 108 is configured to at least temporarily retain the coil 110 of the wire 102. In still another example of the wire carrier 100, the first end holder 118 is configured to at least temporarily retain the first end 114 of the wire 102. In still yet another example of the wire carrier 100, the second end holder 120 is configured to at least temporarily retain the second end 116 of the wire 102.

In another example of the wire carrier 100, the first location for the first coil holder 108 and the second location for the first end holder 118 define a first breakout length 302 between the first end 114 of the wire 102 and the coil 110 of the wire 102. In yet another example of the wire carrier 100, the first location for the first coil holder 108 and the third location for the second end holder 120 define a second breakout length 304 between the second end 116 of the wire 102 and the coil 110 of the wire 102. In still another example of the wire carrier 100, the first end 114 of the wire 102 and the second end 116 of wire 102 include terminated connections 122. In a further example, the terminated connections 122 include a pin, a jack, a male pin, a socket, a female pin, a receptacle, a contact, a lug. a connector or any other suitable wire termination in any suitable combination.

In still yet another example of the wire carrier 100, the first coil holder 108 includes a clamp 402 with an open state in which the clamp receives or releases the coil 110 of the wire 102 and a closed state in which the clamp grips the coil 110. In a further example, the clamp 402 includes a loosely closed state in which the clamp 402 is closed enough that the coil 110 of the wire 102 is retained and open enough to permit the coil 110 to slide through the clamp 402.

In another example of the wire carrier 100, the first end holder 118 includes a clamp 502 with an open state in which the clamp 502 receives or releases the first end 114 of the wire 102 and a closed state in which the clamp 502 grips the first end 114. In a further example, the clamp 502 includes a first keyhole 504 configured for engagement by a first key tool 1306 in conjunction with moving the clamp 502 to the open state. The clamp 502 is biased to the closed state and configured to enable the first key tool 1306 to hold the clamp 502 in the open state. In yet another example of the wire carrier 100, the second end holder 120 includes a clamp 602 with an open state in which the clamp 602 receives or releases the second end 116 of the wire 102 and a closed state in which the clamp 602 grips the second end 116. In a further example, the clamp 602 includes a second keyhole 604 configured for engagement by a second key tool 1406 in conjunction with moving the clamp 602 to the open state. The clamp 602 is biased to the closed state and configured to enable the second key tool 1406 to hold the clamp 602 in the open state.

In still another example, the wire carrier 100 also includes a second coil holder 124 secured to the front side 106 of the support structure 104 at a fourth location corresponding to a second position 126 on the coil 110 of the wire 102 opposing the first position 112 on the coil 110. In a further example, the second coil holder 124 is configured to at least temporarily further retain the coil 110 of the wire 102. In another further example, the second coil holder 124 includes a clamp 702 with an open state in which the clamp 702 receives or releases the coil 110 of the wire 102 and a closed state in which the clamp 702 grips the coil 110. In an even further example, the clamp 702 includes a loosely closed state in which the clamp 702 is closed enough that the coil 110 of the wire 102 is retained and open enough to permit the coil 110 to slide through the clamp 702.

In yet another further example, the first location for the first coil holder 108 and the fourth location for the second coil holder 124 define a central area 306 of the coil 110 of the wire 102 in relation to the support structure 104, a height dimension 308 for the coil 110 and a range of width dimensions 310 for the coil 110. In still yet another example, the wire carrier 100 also includes an interface member 128 secured to a top side 130 of the support structure 104 and extending outward for connection with a wire transport system 802 to suspend the wire carrier 100 from the wire transport system 802 in conjunction with transport of the wire 102 from a wire preparation system 804 to a wire assembly system 806.

In another example, the wire carrier 100 also includes a ferromagnetic member 204 secured to the rear side 202 of the support structure 104. In a further example, the ferromagnetic member 204 is configured to at least attract and hold the wire carrier 100 to an electromagnet 902 in a docking station 900 for the wire carrier 100 after the electromagnet 902 is activated and until the electromagnet 902 is deactivated. In another further example, the ferromagnetic member 204 includes an iron material, a cobalt material, a steel material, a nickel material, a manganese material, a gadolinium material, a lodestone material or any other suitable ferromagnetic material in any suitable combination. In yet another example, the wire carrier 100 also includes a projecting member 206 secured to the rear side 202 of the support structure 104 and protruding from the rear side 202. In a further example, the projecting member 206 is configured to at least temporarily be held captive by a clamping device 904 at a docking station 900 for the wire carrier 100.

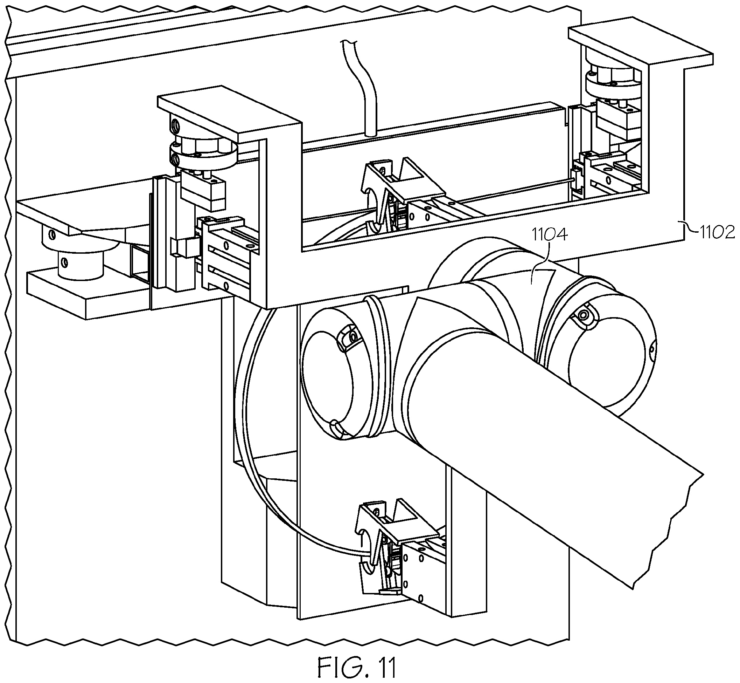

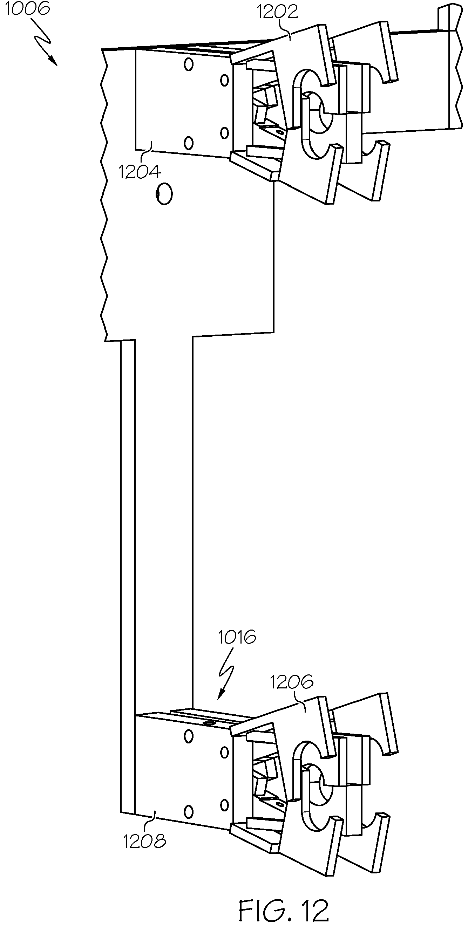

Referring generally to Figs. 1, 3, 5, 8 and 10-14, by way of examples, the present disclosure is directed to an end effector 1000 for transporting a wire 102. Fig. 1 shows an example of a wire carrier 100 holding an example of the wire 102. Fig. 3 shows an example of the wire 102. Fig. 5 shows an example of a first end holder 118 in the wire carrier 100 of Fig. 1. Fig. 8 provides a functional block diagram of an example of a fabrication system for transporting the wire of Fig. 3. Fig. 10 shows an example of the end effector 1000 for transporting a wire 102. Fig. 11 provides a rear perspective view of the end effector 1000 of Fig. 10. Fig. 12 shows examples of a first retaining device 1006 and a fourth retaining device 1016 in the end effector of Fig. 10. Fig. 13 shows examples of a second retaining device 1008 and a first key assembly 1012 in the end effector 1000 of Fig. 10. Fig. 14 shows examples of a third retaining device 1010 and a second key assembly 1014 in the end effector 1000 of Fig. 10.

With reference again to Figs. 1, 3, 5, 8 and 10-14, in one or more examples, an end effector 1000 for transporting a wire 102 includes a support structure 1002, a first retaining device 1006, a second retaining device 1008, a third retaining device 1010 and an interface member 1104. The support structure 1002 includes a front side 1004 and a rear side 1102. The first retaining device 1006 is secured to the front side 1004 of the support structure 1002 at a first location corresponding to a coil 110 of the wire 102 and a first position 112 on the coil 110 between a first end 114 of the wire 102 and a second end 116 of the wire 102. The second retaining device 1008 is secured to the front side 1004 of the support structure 1002 at a second location corresponding to the first end 114 of the wire 102. The third retaining device 1010 is secured to the front side 1004 of the support structure 1002 at a third location corresponding to the second end 116. The interface member 1104 is secured to the rear side 1102 of the support structure 1002 extending from the rear side 1102 for connection with an electro-mechanical manipulator 808, 810 in conjunction with control of the end effector 1000 during the transporting of the wire 102.

In another example of the end effector 1000, the wire 102 includes a single conductor, a twisted pair of conductors, a multiconductor cable, a shielded cable, an unjacketed cable, a coaxial cable, a matched-impedance cable, a fiber optic cable or any other suitable wire in any suitable combination.

In yet another example of the end effector 1000, the first retaining device 1006 is configured to at least temporarily retain the coil 110 of the wire 102.

In still another example of the end effector 1000, the second retaining device 1008 is configured to at least temporarily retain the first end 114 of the wire 102.

In still yet another example of the end effector 1000, the third retaining device 1010 is configured to at least temporarily retain the second end 116 of the wire 102.

In another example of the end effector 1000, the first location for the first retaining device 1006 and the second location for the second retaining device 1008 define a first breakout length 302 between the first end 114 of the wire 102 and the coil 110 of the wire 102.

In yet another example of the end effector 1000, the first location for the first retaining device 1006 and the third location for the third retaining device 1010 define a second breakout length 304 between the second end 116 of the wire 102 and the coil 110 of the wire 102.

In still another example of the end effector 1000, the first end 114 of the wire 102 and the second end 116 of the wire 102 include terminated connections 122. In a further example, the terminated connections 122 include a pin, a jack, a male pin, a socket, a female pin, a receptacle, a contact, a lug, a connector or any other suitable wire termination in any suitable combination.

In still yet another example of the end effector 1000, the electro-mechanical manipulator 808, 810 includes a robotic manipulator, a robotic arm, a collaborative robot, an automated mechanical manipulator, a semi-automated mechanical manipulator, a fixed-actuator tending robot, a semi-manual use robot or any other suitable manipulator in any suitable combination.

In another example of the end effector 1000, the first retaining device 1006 includes a clamp 1202 with an open state in which the clamp 1202 receives or releases the coil 110 of the wire 102 and a closed state in which the clamp 1202 grips the coil 110. In a further example, the clamp 1202 includes a loosely closed state in which the clamp 1202 is closed enough that the coil 110 of the wire 102 is retained and open enough to permit the coil 110 of the wire 102 to slide through the clamp 1202.

In another further example, the end effector 1000 also includes a control assembly 1204 in operative communication with the electro-mechanical manipulator 808, 810 via the interface member 1104 to control the clamp 1202 in response to communications with the electro-mechanical manipulator 808, 810. In an even further example, the control assembly 1204 includes an actuator mechanically linked to the clamp 1202. In an even yet further example, the actuator includes a pneumatic actuator, an electric actuator, a rotary actuator, a linear actuator, a solenoid or any other suitable type of actuator in any suitable combination.

In yet another example of the end effector 1000, the second retaining device 1008 includes a clamp 1302 with an open state in which the clamp 1302 receives or releases the first end 114 of the wire 102 and a closed state in which the clamp 1302 grips the first end 114. In a further example, the end effector 1000 also includes a control assembly 1304 in operative communication with the electro-mechanical manipulator 808, 810 via the interface member 1104 to control the clamp 1302 in response to communications with the electro-mechanical manipulator 808, 810. In an even further example, the control assembly 1304 includes an actuator mechanically linked to the clamp 1302. In an even yet further example, the actuator includes a pneumatic actuator, an electric actuator, a rotary actuator, a linear actuator, a solenoid or any other suitable type of actuator in any suitable combination.

In still yet another example, the end effector 1000 also includes a first key assembly 1012 with a first key tool 1306 and configured to move the first key tool 1306 between a closed state and an open state. The first key assembly 1012 configured to engage the first key tool 1306 with a first keyhole 504 in a first end holder 118 of a wire carrier 100 in the closed state. The end holder 118 configured to at least temporarily retain the first end 114 of the wire 102. The first key assembly 1012 configured to change the first end holder 118 to the open state in conjunction with the second retaining device 1008 placing the first end 114 in the first end holder 118 or picking the first end 114 from the first end holder 118. In a further example, the first key assembly 1012 also includes a control assembly 1308 in operative communication with the electro-mechanical manipulator 808, 810 via the interface member 1104 to control the first key tool 1306 in response to communications with the electro-mechanical manipulator 808, 810. In an even further example, the control assembly 1308 includes an actuator mechanically linked to the first key tool 1306. In an even yet further example, the actuator includes a pneumatic actuator, an electric actuator, a rotary actuator, a linear actuator, a solenoid or any other suitable type of actuator in any suitable combination.

In another example of the end effector 1000, the third retaining device 1010 includes a clamp 1402 with an open state in which the clamp 1402 receives or releases the second end 116 of the wire 102 and a closed state in which the clamp 1402 grips the second end 116. In a further example, the end effector 1000 also includes a control assembly 1404 in operative communication with the electro-mechanical manipulator 808, 810 via the interface member 1104 to control the clamp 1402 in response to communications with the electro-mechanical manipulator 808, 810. In an even further example, the control assembly 1404 includes an actuator mechanically linked to the clamp 1402. In an even yet further example, the actuator includes a pneumatic actuator, an electric actuator, a rotary actuator, a linear actuator, a solenoid or any other suitable type of actuator in any suitable combination.

In yet another example, the end effector 1000 also includes a second key assembly 1014 with a second key tool 1406 and configured to move the second key tool 1406 between a closed state and an open state. The second key assembly 1014 configured to engage the second key tool 1406 with a second keyhole 604 in a second end holder 120 of a wire carrier 100 in the closed state, the second end holder 120 configured to at least temporarily retain the second end 116 of the wire 102. The second key assembly 1014 configured to change the second end holder 120 to the open state in conjunction with the second retaining device 1008 placing the second end 116 in the second end holder 120 or picking the second end 116 from the second end holder 120. In a further example, the second key assembly 1014 also includes a control assembly 1408 in operative communication with the electro-mechanical manipulator 808, 810 via the interface member 1104 to control the second key tool 1406 in response to communications with the electro-mechanical manipulator 808, 810. In an even further example, the control assembly 1408 includes an actuator mechanically linked to the second key tool 1406. In an even yet further example, the actuator includes a pneumatic actuator, an electric actuator, a rotary actuator, a linear actuator, a solenoid or any other suitable type of actuator in any suitable combination.

In still another example, the end effector 1000 also includes a fourth retaining device 1016 secured to the front side 1004 of the support structure 1002 at a fourth location corresponding to a second position 126 on the coil 110 of the wire (102) opposing the first position 112 on the coil 110. In a further example, the fourth retaining device 1016 is configured to at least temporarily further retain the coil 110 of the wire 102.

In another further example, the fourth retaining device 1016 includes a clamp 1206 with an open state in which the clamp 1206 receives or releases the coil 110 of the wire 102 and a closed state in which the clamp 1206 grips the coil 110. In an even further example, the clamp 1206 includes a loosely closed state in which the clamp 1206 is closed enough that the coil 110 of the wire 102 is retained and open enough to permit the coil 110 to slide through the clamp 1206.

In another even further example, the end effector 1000 also includes a control assembly 1208 in operative communication with the electro-mechanical manipulator 808, 810 via the interface member 1104 to control the clamp 1206 in response to communications with the electro-mechanical manipulator 808, 810. In an even yet further example, the control assembly 1208 includes an actuator mechanically linked to the clamp 1206. In an even still further example, the actuator includes a pneumatic actuator, an electric actuator, a rotary actuator, a linear actuator, a solenoid or any other suitable type of actuator in any suitable combination.

In yet another further example, the first location for the first retaining device 1006 and the fourth location for the fourth retaining device 1016 define a central area 306 of the coil 110 of the wire 102 in relation to the support structure 1002, a height dimension 308 for the coil 110 and a range of width dimensions 310 for the coil 110.

In still yet another example of the end effector 1000, in conjunction with the control by the electro-mechanical manipulator 808, 810 via the interface member 1104, the end effector 1000 is configured to pick the coil 110 of the wire 102 with the first end 114 and the second end 116 at a predetermined location in a wire preparation system 804 and place the coil 110 with the first end 114 and the second end 116 on a wire carrier 100 suspended from a wire transport system 802 in conjunction with transport of the wire 102 to a wire assembly system 806.

In another example of the end effector 1000, in conjunction with the control by the electro-mechanical manipulator 808, 810 via the interface member 1104, the end effector 1000 is configured to receive the coil 110 of the wire 102 with the first end 114 and the second end 116 from a wire preparation system 804 at a predetermined location and place the coil 110 with the first end 114 and the second end 116 on a wire carrier 100 suspended from a wire transport system 802 in conjunction with transport of the wire 102 to a wire assembly system 806.

In yet another example of the end effector 1000, in conjunction with the control by the electro-mechanical manipulator 808, 810 via the interface member 1104, the end effector 1000 is configured to pick the coil 110 of the wire 102 with the first end 114 and the second end 116 from a wire carrier 100 suspended from a wire transport system 802 and place the coil 110 with the first end 114 and the second end 116 at a predetermined location in a wire assembly system 806.

Referring generally to Figs. 1, 3-8, 10, 13-22, 23A-B, 24-28, 29A-B, 30-34 and 35A-B, by way of examples, the present disclosure is directed to a method 1500 for transporting a wire 102. Fig. 1 shows an example of a wire carrier 100 holding an example of the wire 102. Fig. 2 shows a rear perspective view of the wire carrier 100 of Fig. 1. Fig. 3 shows an example of the wire 102. Fig. 4 shows an example of a first coil holder 108 in the wire carrier 100 of Fig. 1. Fig. 5 shows an example of a first end holder 118 in the wire carrier 100 of Fig. 1. Fig. 6 shows an example of a second end holder 120 in the wire carrier of Fig. 1. Fig. 7 shows an example of a second coil holder 124 in the wire carrier of Fig. 1. Fig. 8 provides a functional block diagram of an example of a fabrication system for transporting the wire of Fig. 3. Fig. 9 shows an example of a docking station 900 for the wire carrier 100 of Fig. 1. Fig. 10 shows an example of an end effector 1000 for transporting a wire 102. Fig. 11 provides a rear perspective view of the end effector 1000 of Fig. 10. Fig. 12 shows examples of a first retaining device 1006 and a fourth retaining device 1016 in the end effector of Fig. 10. Fig. 13 shows examples of a second retaining device 1008 and a first key assembly 1012 in the end effector 1000 of Fig. 10. Fig. 14 shows examples of a third retaining device 1010 and a second key assembly 1014 in the end effector 1000 of Fig. 10.

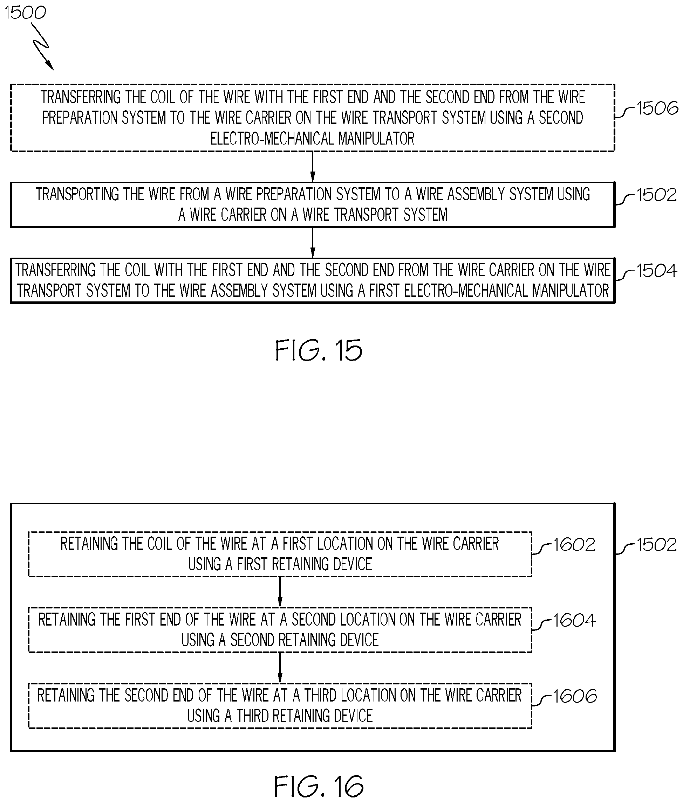

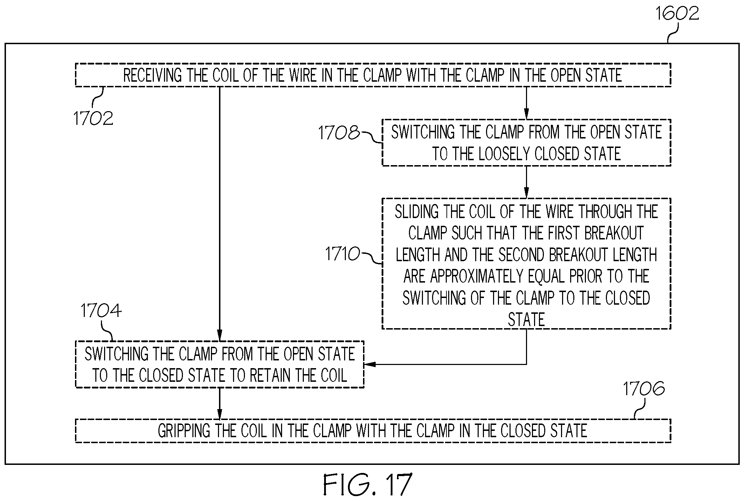

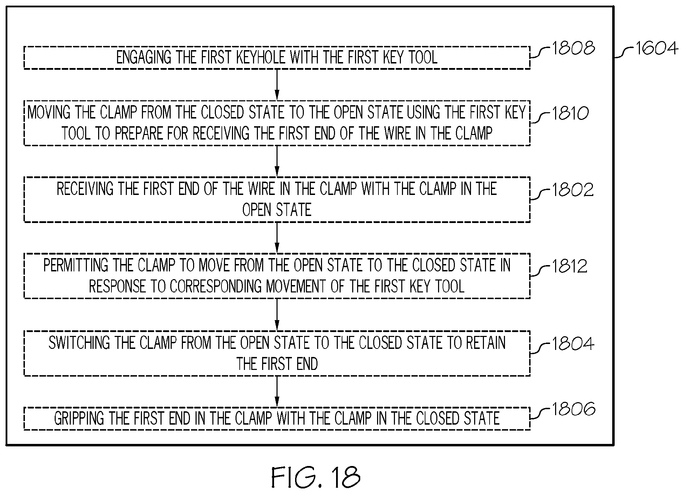

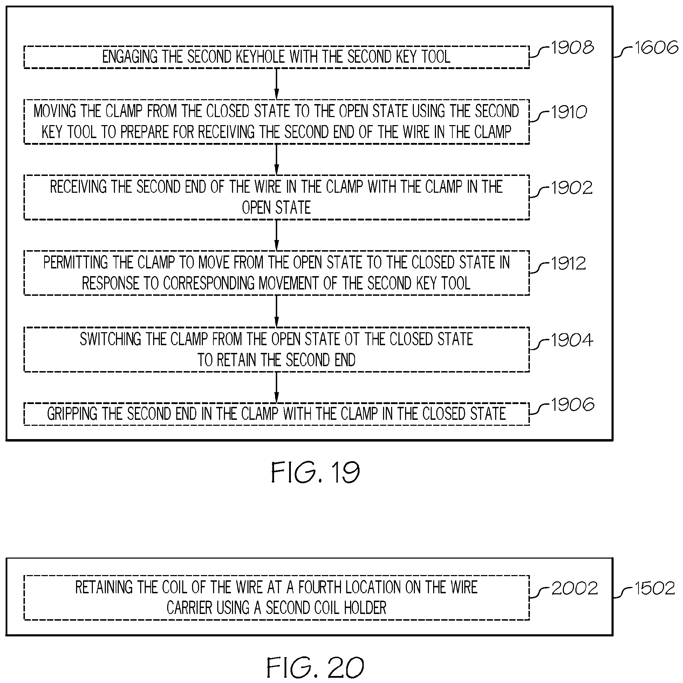

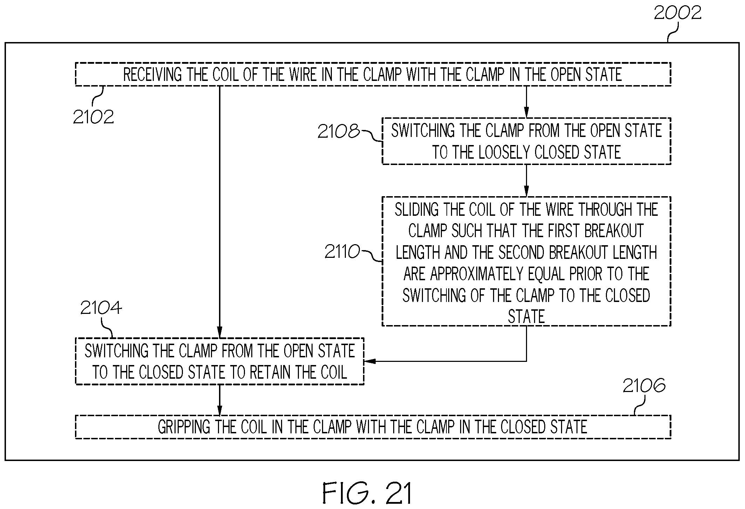

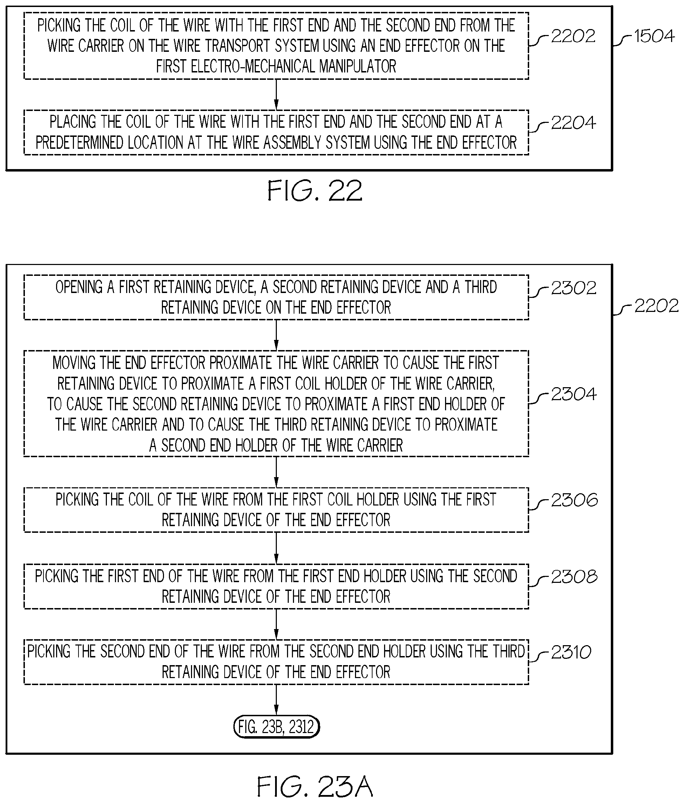

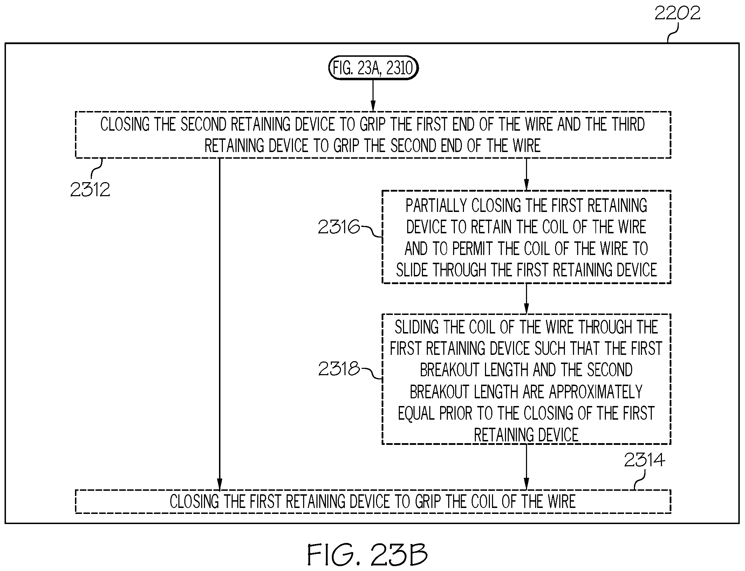

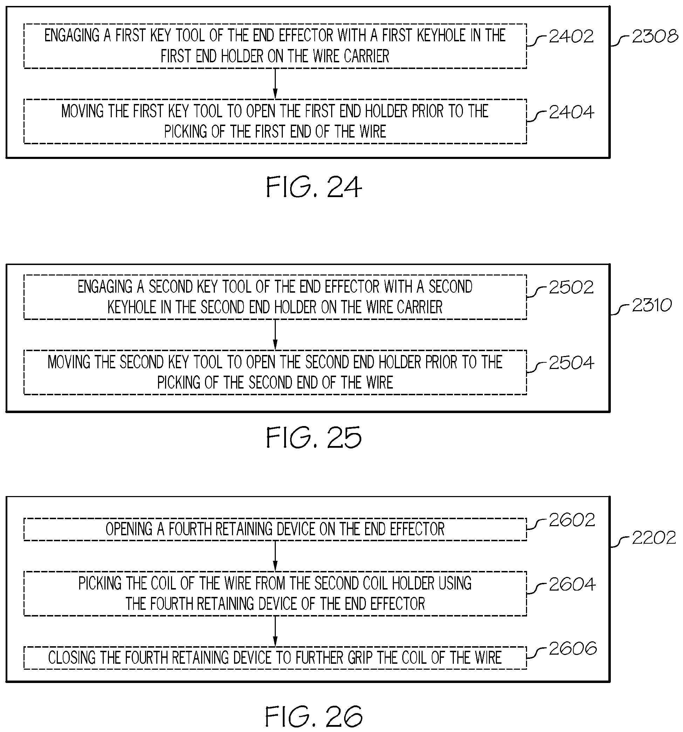

Fig. 15 provides an example of the method 1500 for transporting the wire 102. Fig. 16 provides an example of the transporting 1502 of the coil 110 in the method 1500 of Fig. 15. Fig. 17 provides an example of the retaining 1602 (see Fig. 16) of the coil 110 of Fig. 16. Fig. 18 provides an example of the retaining 1604 of the first end 114 of Fig. 16. Fig. 19 provides an example of the retaining 1606 of the second end 116 of Fig. 16. Fig. 20, in combination with Fig. 16, provide another example of the transporting 1502 of the coil 110 of Fig. 15. Fig. 21 provides an example of the retaining 2002 of the coil 110 of Fig. 20. Fig. 22 provides an example of the transferring 1504 of the coil 110 in the method 1500 of Fig. 15. Figs. 23A-B provide an example of the picking 2202 of the coil 110 of Fig. 22. Fig. 24 provides an example of the picking 2308 of the first end 114 of Fig. 23. Fig. 25 provides an example of the picking 2310 of the second end 116 of Fig. 23. Fig. 26, in combination with

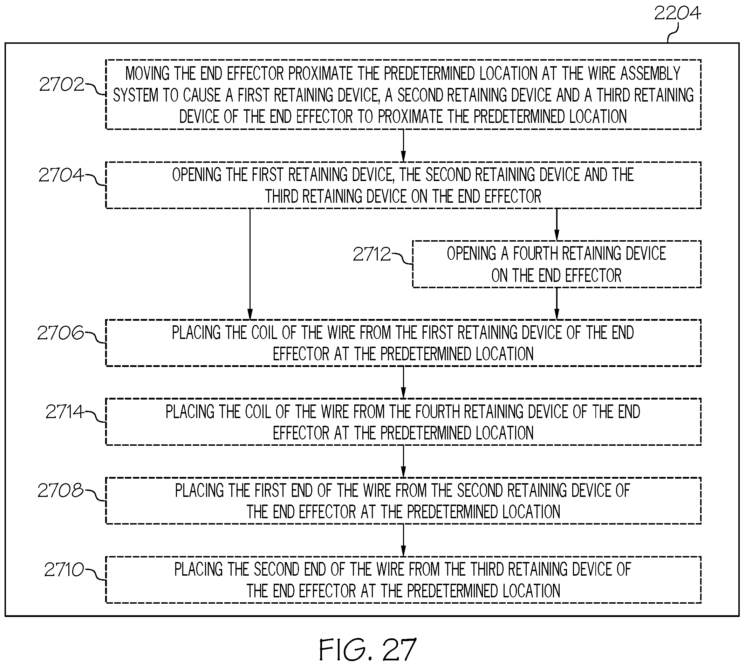

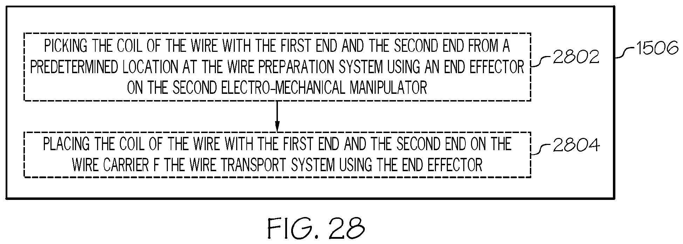

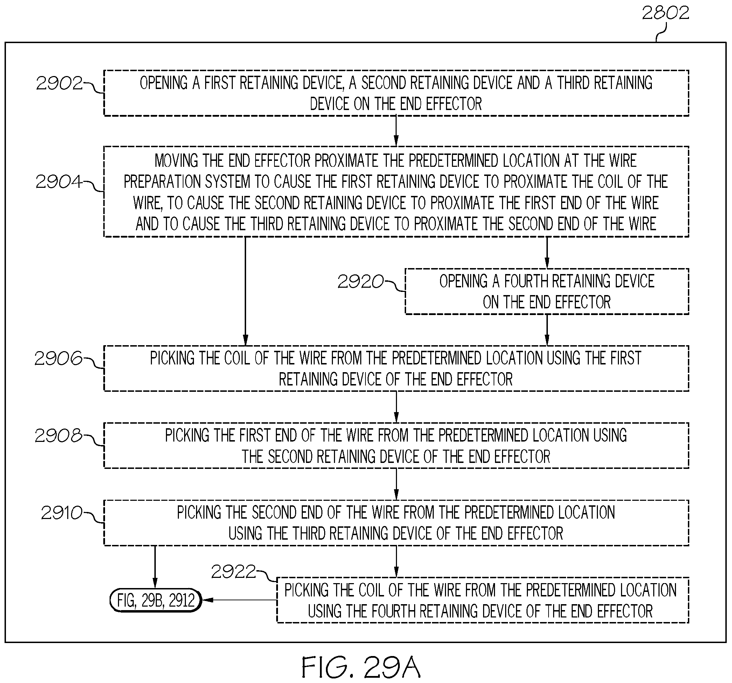

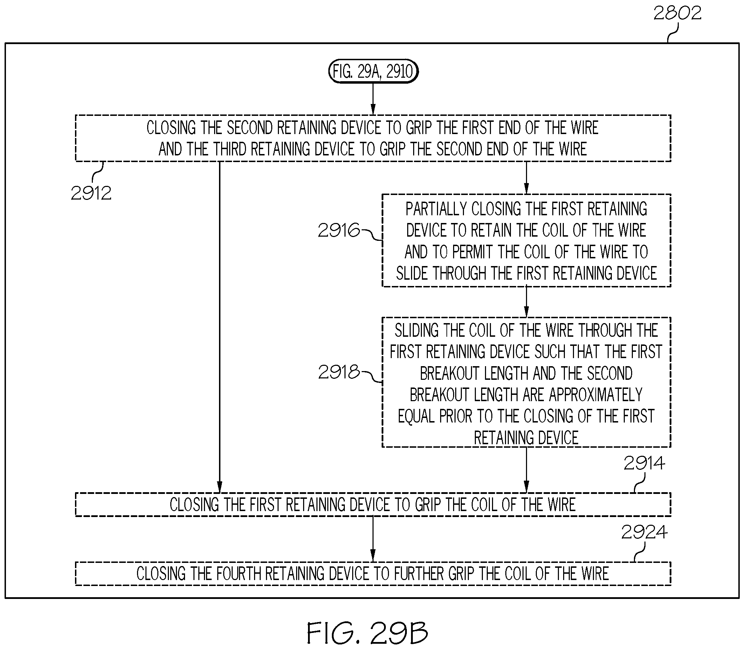

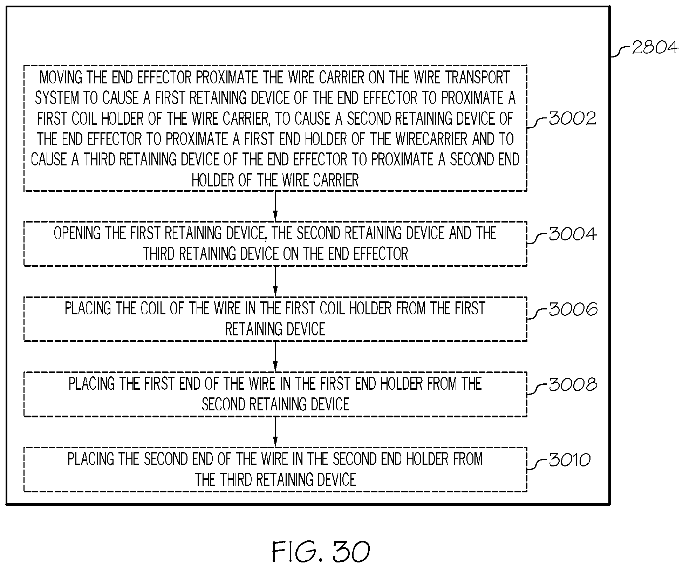

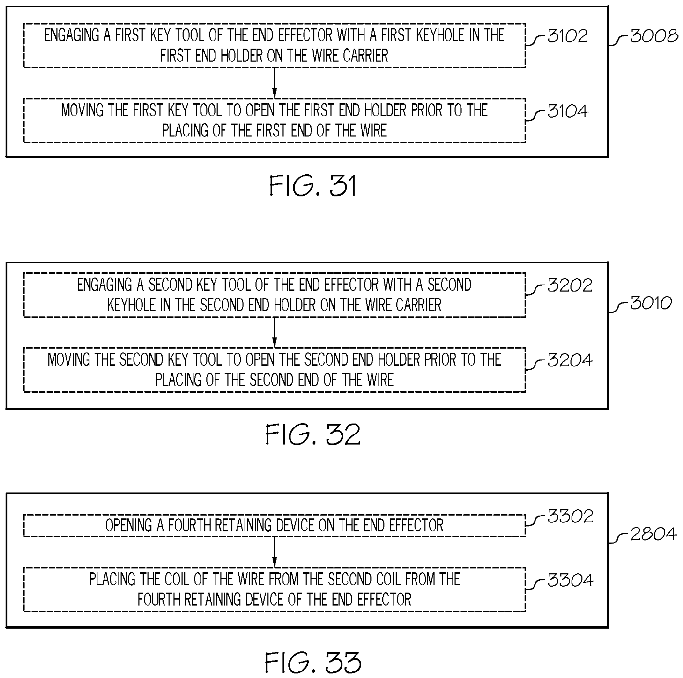

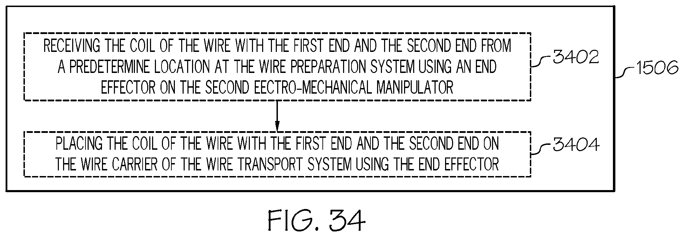

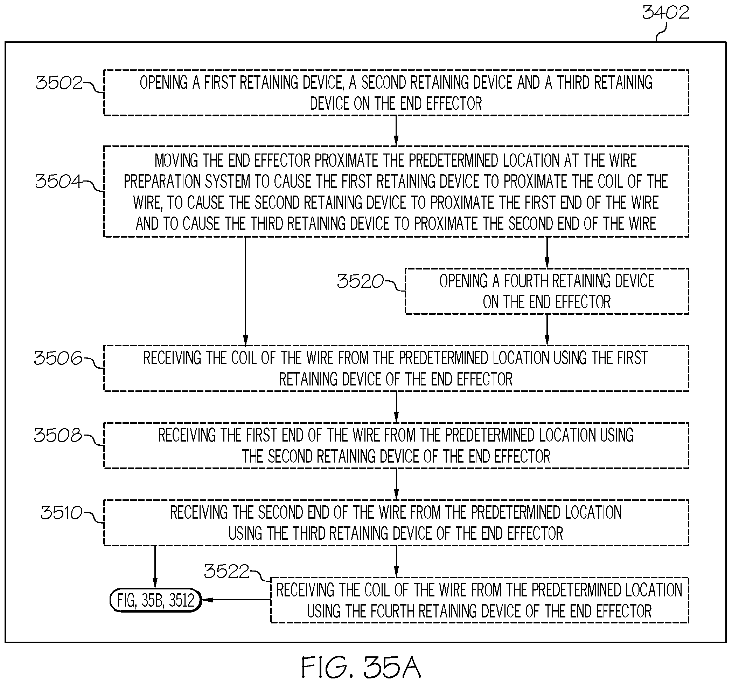

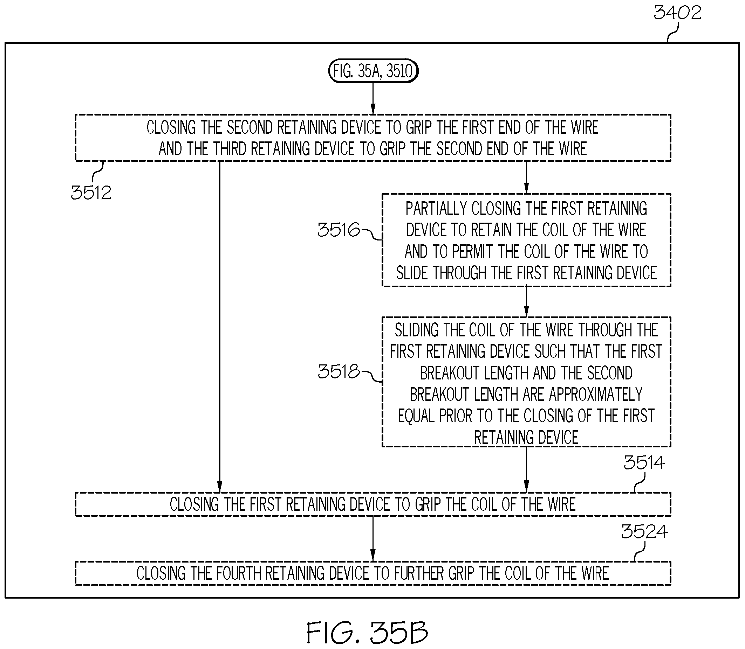

Figs. 23A-B, provide another example of the picking 2202 of the coil 110 of Fig. 22. Fig. 27 provides an example of the placing 2204 of the coil 110 of Fig. 22. Fig. 28 provides an example of the transferring 1506 of the coil 110 in the method 1500 of Fig. 15. Figs. 29A-B provide an example of the picking 2802 of the coil 110 of Fig. 28. Fig. 30 provides an example of the placing 2804 of the coil 110 of Fig. 28. Fig. 31 provides an example of the placing 3008 of the first end 114 of Fig. 30. Fig. 32 provides an example of the placing 3010 of the second end 116 of Fig. 30. Fig. 33, in combination with Fig. 30, provide another example of the placing 2804 of the coil 110 of Fig. 28. Fig. 34 provides another example of the transferring 1506 of the coil 110 in the method 1500 of Fig. 15. Figs. 35A-B provide an example of the receiving 3402 of the coil 110 of Fig. 34.

With reference again to Figs. 1, 3-8, 10, 13-22, 23A-B, 24-28, 29A-B, 30-34 and 35A-B, in one or more examples, a method 1500 (see Fig. 15) for transporting a wire 102 includes transporting 1502 the wire 102 from a wire preparation system 804 to a wire assembly system 806 using a wire carrier 100 on a wire transport system 802. The wire 102 includes a first end 114 and a second end 116. The wire preparation system 804 having formed the wire 102 in a coil 110 with a first breakout length 302 between the coil 110 of the wire 102) and the first end 114 and a second breakout length 304 between the coil 110 and the second end 116. At 1504, the coil 110 with the first end 114 and the second end 116 is transported from the wire carrier 100 on the wire transport system 802 to the wire assembly system 806 using a first electro-mechanical manipulator 808.

In another example of the method 1500, the transporting 1502 of the wire 102 includes retaining 1602 (see Fig. 16) the coil 110 of the wire 102 at a first location on the wire carrier 100 using a first coil holder 108. The first location corresponding to a first position 112 on the coil 110 between the first end 114 and the second end 116. At 1604, the first end 114 of the wire 102 at a second location on the wire carrier 100 is retained using a first end holder 118. The second location corresponding to the first end 114 and the first breakout length 302 between the coil 110 and the first end 114. At 1606, the second end 116 of the wire 102 at a third location on the wire carrier 100 is retained using a second end holder 120. The third location corresponding to the second end 116 and the second breakout length 304 between the coil 110 and the second end 116.

In a further example, the first coil holder 108 includes a clamp 402 with an open state in which the clamp receives the coil 110 of the wire 102 and a closed state in which the clamp 402 grips the coil 110. In this example, the retaining 1602 of the coil 110 of the wire 102 at the first location includes receiving 1702 (see Fig. 17) the coil 110 of the wire 102 in the clamp 402 with the clamp 402 in the open state. At 1704, the clamp 402 is switched from the open state to the closed state to retain the coil 110. At 1706, the coil 110 is gripped in the clamp 402 with the clamp 402 in the closed state. In an even further example, the clamp 402 includes a loosely closed state in which the clamp 402 is closed enough that the coil 110 of the wire 102 is retained and open enough to permit the coil 110 to slide through the clamp 402. In this example, the retaining 1602 of the coil 110 of the wire 102 at the first location also includes switching 1708 the clamp 402 from the open state to the loosely closed state. At 1710, the coil 110 of the wire 102 is slid through the clamp 402 such that the first breakout length 302 and the second breakout length 304 are approximately equal prior to the switching 1704 of the clamp 402 to the closed state.

In another further example, the first end holder 118 includes a clamp 502 with an open state in which the clamp 502 receives the first end 114 of the wire 102 and a closed state in which the clamp 502 grips the first end 114. In this example, the retaining 1606 of the first end 114 of the wire 102 at the second location includes receiving 1802 (see Fig. 18) the first end 114 of the wire 102 in the clamp 502 with the clamp 502 in the open state. At 1804, the clamp 502 is switched from the open state to the closed state to retain the first end 114. At 1806, the first end 114 is gripped in the clamp 502 with the clamp 502 in the closed state. In an even further example, the clamp 502 includes a first keyhole 504 configured for engagement by a first key tool 1306 in conjunction with moving the clamp 502 to the open state and back to the closed state. The clamp 502 is biased to the closed state and configured to enable the first key tool 1306 to hold the clamp 502 in the open state. In this example, the retaining 1606 of the first end 114 of the wire 102 at the second location also includes engaging 1808 the first keyhole 504 with the first key tool 1306. At 1810, the clamp 502 is moved from the closed state to the open state using the first key tool 1306 to prepare for receiving 1802 the first end 114 of the wire 102 in the clamp 502. At 1812, the clamp 502 is permitted to move from the open state to the closed state in response to corresponding movement of the first key tool 1306.

In yet another further example, the second end holder 120 includes a clamp 602 with an open state in which the clamp 602 receives the second end 116 of the wire 102 and a closed state in which the clamp grips the second end 116. In this example, the retaining 1606 of the second end 116 of the wire 102 at the third location includes receiving 1902 (see Fig. 19) the second end 116 of the wire 102 in the clamp 602 with the clamp 602 in the open state. At 1904, the clamp 602 is switched from the open state to the closed state to retain the second end 116. At 1906, the second end 116 is gripped in the clamp 602 with the clamp 602 in the closed state. In an even further example, the clamp 602 includes a second keyhole 604 configured for engagement by a second key tool 1406 in conjunction with moving the clamp 602 to the open state and back to the closed state. The clamp 602 is biased to the closed state and configured to enable the second key tool 1406 to hold the clamp 602 in the open state. In this example, the retaining 1606 of the second end 116 of the wire 102 at the third location also includes engaging 1908 the second keyhole 604 with the second key tool 1406. At 1910, the clamp 602 is moved from the closed state to the open state using the second key tool 1406 to prepare for receiving 1902 the second end 116 of the wire 102 in the clamp. At 1912, the clamp 602 is permitted to move from the open state to the closed state in response to corresponding movement of the second key tool 1406.

In still another further example, the transporting 1502 of the wire 102 also includes retaining 2002 (see Fig. 20) the coil 110 of the wire 102 at a fourth location on the wire carrier 100 using a second coil holder 124. The fourth location corresponds to a second position 126 on the coil 110 opposing the first position 112 on the coil 110. In an even further example, the second coil holder 124 includes a clamp 702 with an open state in which the clamp 702 receives the coil 110 of the wire 102 and a closed state in which the clamp 702 grips the coil 110. In this example, the retaining 2002 of the coil 110 of the wire 102 at the fourth location includes receiving 2102 (see Fig. 21) the coil 110 of the wire 102 in the clamp 702 with the clamp 702 in the open state. At 2104, the clamp 702 is switched from the open state to the closed state to retain the coil 110. At 2106, the coil 110 is gripped in the clamp 702 with the clamp 702 in the closed state. In an even yet further example, the clamp 702 includes a loosely closed state in which the clamp 702 is closed enough that the coil 110 of the wire 102 is retained and open enough to permit the coil 110 to slide through the clamp 702. In this example, the retaining 2002 of the coil 110 of the wire 102 at the fourth location also includes switching 2108 the clamp 702 from the open state to the loosely closed state. At 2110, the coil 110 of the wire 102 is slid through the clamp 702 such that the first breakout length 302 and the second breakout length 304 are approximately equal prior to the switching 2104 of the clamp 702 to the closed state.

In another example of the method 1500, the transferring 1504 of the coil 110 includes picking 2202 (see Fig. 22) the coil 110 of the wire 102 with the first end 114 and the second end 116 from the wire carrier 100 on the wire transport system 802 using an end effector 1000 on the first electro-mechanical manipulator 808. At 2204, the coil 110 of the wire 102 with the first end 114 and the second end 116 is placed at a predetermined location at the wire assembly system 806 using the end effector 1000.

In a further example, the picking 2202 of the coil 110 includes opening 2302 (see Fig. 23A) a first retaining device 1006, a second retaining device 1008 and a third retaining device 1010 on the end effector 1000. At 2304, the end effector 1000 is moved proximate the wire carrier 100 to cause the first retaining device 1006 to proximate a first coil holder 108 of the wire carrier 100, to cause the second retaining device 1008 to proximate a first end holder 118 of the wire carrier 100 and to cause the third retaining device 1010 to proximate a second end holder 120 of the wire carrier 100. At 2306, the coil 110 of the wire 102 is picked from the first coil holder 108 using the first retaining device 1006 of the end effector 1000. At 2308, the first end 114 of the wire 102 is picked from the first end holder 118 using the second retaining device 1008 of the end effector 1000. At 2310, the second end 116 of the wire 102 is picked from the second end holder 120 using the third retaining device 1010 of the end effector 1000. At 2312, the second retaining device 1008 is closed to grip the first end 114 of the wire 102 and the third retaining device 1010 is closed to grip the second end 116 of the wire 102. At 2314, the first retaining device 1006 is closed to grip the coil 110 of the wire 102.

In an even further example, the picking 2202 of the coil 110 also includes partially closing 2316 the first retaining device 1006 to retain the coil 110 of the wire 102 and to permit the coil 110 of the wire 102 to slide through the first retaining device 1006. At 2318, the coil 110 of the wire 102 is slid through the first retaining device 1006 such that the first breakout length 302 and the second breakout length 304 are approximately equal prior to the closing 2314 of the first retaining device 1006. In another even further example, the picking 2308 of the first end 114 of the wire 102 includes engaging 2402 (see Fig. 24) a first key tool 1306 of the end effector 1000 with a first keyhole 504 in the first end holder 118 on the wire carrier 100. At 2404, the first key tool 1306 is moved to open the first end holder 118 prior to the picking 2308 of the first end 114 of the wire 102.

In yet another even further example, the picking 2310 of the second end 116 of the wire 102 includes engaging 2502 (see Fig. 25) a second key tool 1406 of the end effector 1000 with a second keyhole 604 in the second end holder 120 on the wire carrier 100. At 2504, the second key tool 1406 is moved to open the second end holder 120 prior to the picking 2310 of the second end 116 of the wire 102. In still another even further example, the picking 2202 of the coil 110 also includes opening 2602 (see Fig. 26) a fourth retaining device 1016 on the end effector 1000. The moving 2304 of the end effector 1000 proximate the wire carrier 100 caused the fourth retaining device 1016 to proximate a second coil holder 124 of the wire carrier 100. At 2604, the coil 110 of the wire 102 is picked from the second coil holder 124 using the fourth retaining device 1016 of the end effector 1000. At 2606, the fourth retaining device 1016 is closed to further grip the coil 110 of the wire 102.

In another further example, the placing 2204 of the coil 110 includes moving 2702 (see Fig. 27) the end effector 1000 proximate the predetermined location at the wire assembly system 806 to cause a first retaining device 1006, a second retaining device 1008 and a third retaining device 1010 of the end effector 1000 to proximate the predetermined location. At 2704, the first retaining device 1006, the second retaining device 1008 and the third retaining device 1010 on the end effector 1000 are opened. At 2706, the coil 110 of the wire 102 is placed from the first retaining device 1006 of the end effector 1000 at the predetermined location. At 2708, the first end 114 of the wire 102 is placed from the second retaining device 1008 of the end effector 1000 at the predetermined location. At 2710, the second end 116 of the wire 102 is placed from the third retaining device 1010 of the end effector 1000 at the predetermined location. In an even further example, the placing 2204 of the coil 110 also includes opening 2712 a fourth retaining device 1016 on the end effector 1000. The moving 2702 of the end effector 1000 proximate the predetermined location at the wire assembly system 806 caused the fourth retaining device 1016 on the end effector 1000 to proximate the predetermined location. At 2714, the coil 110 of the wire 102 is placed from the fourth retaining device 1016 of the end effector 1000 at the predetermined location.

In yet another example, the method 1500 also includes transferring 1506 the coil 110 of the wire 102 with the first end 114 and the second end 116 from the wire preparation system 804 to the wire carrier 100 on the wire transport system 802 using a second electro-mechanical manipulator 810.

In a further example, the transferring 1506 of the coil 110 includes picking 2802 (see Fig. 28) the coil 110 of the wire 102 with the first end 114 and the second end 116 from a predetermined location at the wire preparation system 804 using an end effector 1000 on the second electro-mechanical manipulator 810. At 2804, the coil 110 of the wire 102 with the first end 114 and the second end 116 is placed on the wire carrier 100 of the wire transport system 802 using the end effector 1000.

In an even further example, the picking 2802 of the coil 110 includes opening 2902 (see Fig. 29A) a first retaining device 1006, a second retaining device 1008 and a third retaining device 1010 on the end effector 1000. At 2904, the end effector 1000 is moved proximate the predetermined location at the wire preparation system 804 to cause the first retaining device 1006 to proximate the coil 110 of the wire 102, to cause the second retaining device 1008 to proximate the first end 114 of the wire 102 and to cause the third retaining device 1010 to proximate the second end 116 of the wire 102. At 2906, the coil 110 of the wire 102 is picked from the predetermined location using the first retaining device 1006 of the end effector 1000. At 2908, the first end 114 of the wire 102 is picked from the predetermined location using the second retaining device 1008 of the end effector 1000. At 2910, the second end 116 of the wire 102 is picked from the predetermined location using the third retaining device 1010 of the end effector 1000. At 2912, the second retaining device 1008 is closed to grip the first end 114 of the wire 102 and the third retaining device 1010 is closed to grip the second end 116 of the wire 102. At 2914, the first retaining device 1006 is closed to grip the coil 110 of the wire 102.

In an even yet further example, the picking 2802 of the coil 110 also includes partially closing 2916 the first retaining device 1006 to retain the coil 110 of the wire 102 and to permit the coil 110 of the wire 102 to slide through the first retaining device 1006. At 2918, the coil 110 of the wire 102 is slid through the first retaining device 1006 such that the first breakout length 302 and the second breakout length 304 are approximately equal prior to the closing 2814 of the first retaining device 1006. In another even yet further example, the picking 2802 of the coil 110 also includes opening 2920 a fourth retaining device 1016 on the end effector 1000. The moving 2904 of the end effector 1000 proximate the predetermined location at the wire preparation system 804 caused the fourth retaining device 1016 to proximate the coil 110 of the wire 102. At 2922, the coil 110 of the wire 102 is picked from the predetermined location using the fourth retaining device 1016 of the end effector 1000. At 2924, the fourth retaining device 1016 is closed to further grip the coil 110 of the wire 102.

In another even further example, the placing 2804 of the coil 110 includes moving 3002 (see Fig. 30) the end effector 1000 proximate the wire carrier 100 on the wire transport system 802 to cause a first retaining device 1006 of the end effector 1000 to proximate a first coil holder 108 of the wire carrier 100, to cause a second retaining device 1008 of the end effector 1000 to proximate a first end holder 118 of the wire carrier 100 and to cause a third retaining device 1010 of the end effector 1000 to proximate a second end holder 120 of the wire carrier 100. At 3004, the first retaining device 1006, the second retaining device 1008 and the third retaining device 1010 on the end effector 1000 are opened. At 3006, the coil 110 of the wire 102 is placed in the first coil holder 108 from the first retaining device 1006 of the end effector 1000. At 3008, the first end 114 of the wire 102 is placed in the first end holder 118 from the second retaining device 1008 of the end effector 1000. At 3010, the second end 116 of the wire 102 is placed in the second end holder 120 from the third retaining device 1010 of the end effector 1000.

In an even yet further example, the placing 3008 of the first end 114 of the wire 102 includes engaging 3102 (see Fig. 31) a first key tool 1306 of the end effector 1000 with a first keyhole 504 in the first end holder 118 on the wire carrier 100. At 3104, the first key tool 1306 is moved to open the first end holder 118 prior to the placing 3008 of the first end 114 of the wire 102. In another even yet further example, the placing 3010 of the second end 116 of the wire 102 includes engaging 3202 (see Fig. 32) a second key tool 1406 of the end effector 1000 with a second keyhole 604 in the second end holder 120 on the wire carrier 100. At 3204, the second key tool 1406 is moved to open the second end holder 120 prior to the placing 3010 of the second end 116 of the wire 102. In yet another even yet further example, the placing 2804 of the coil 110 also includes opening 3302 (see Fig. 33) a fourth retaining device 1016 on the end effector 1000. The moving 3002 of the end effector 1000 proximate the wire carrier 100 on the wire transport system 802 caused the fourth retaining device 1016 of the end effector 1000 to proximate a second coil holder 124 of the wire carrier 100. At 3304, the coil 110 of the wire 102 is placed in the second coil holder 124 from the fourth retaining device 1016 of the end effector 1000.

In another further example, the transferring 1506 of the coil 110 includes receiving 3402 (see Fig. 34) the coil 110 of the wire 102 with the first end 114 and the second end 116 from the wire preparation system 804 at a predetermined location using an end effector 1000 on the second electro-mechanical manipulator 810. At 3404, the coil 110 of the wire 102 with the first end 114 and the second end 116 is placed on the wire carrier 100 of the wire transport system 802 using the end effector 1000.

In an even further example, the receiving 3402 of the coil 110 includes opening 3502 (see Fig. 35A) a first retaining device 1006, a second retaining device 1008 and a third retaining device 1010 on the end effector 1000. At 3504, the end effector 1000 is moved proximate the predetermined location at the wire preparation system 804 to cause the first retaining device 1006 to proximate the coil 110 of the wire 102, to cause the second retaining device 1008 to proximate the first end 114 of the wire 102 and to cause the third retaining device 1010 to proximate the second end 116 of the wire 102. At 3506, the coil 110 of the wire 102 is received from the predetermined location using the first retaining device 1006 of the end effector 1000. At 3508, the first end 114 of the wire 102 is received from the predetermined location using the second retaining device 1008 of the end effector 1000. At 3510, the second end 116 of the wire 102 is received from the predetermined location using the third retaining device 1010 of the end effector 1000. At 3512, the second retaining device 1008 is closed to grip the first end 114 of the wire 102 and the third retaining device 1010 is closed to grip the second end 116 of the wire 102. At 3514, the first retaining device 1006 is closed to grip the coil 110 of the wire 102.

In an even yet further example, the receiving 3402 of the coil 110 also includes partially closing 3516 the first retaining device 1006 to retain the coil 110 of the wire 102 and to permit the coil 110 of the wire 102 to slide through the first retaining device 1006. At 3518, the coil 110 of the wire 102 is slid through the first retaining device 1006 such that the first breakout length 302 and the second breakout length 304 are approximately equal prior to the closing 3514 of the first retaining device 1006.

In another even yet further example, the receiving 3402 of the coil 110 also includes opening 3520 a fourth retaining device 1016 on the end effector 1000. The moving 3504 of the end effector 1000 proximate the predetermined location at the wire preparation system 804 caused the fourth retaining device 1016 to proximate the coil 110 of the wire 102. At 3522, the coil 110 of the wire 102 is picked from the predetermined location using the fourth retaining device 1016 of the end effector 1000. At 3524, the fourth retaining device 1016 is closed to further grip the coil 110 of the wire 102.

Examples of wire carriers 100, end effectors 1000 and methods 1500 for transporting wires 102 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-14, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-14, referred to above, need be included in every example and not all elements, features and/or components described herein are necessarily depicted in each illustrative example. Accordingly, some of the elements, features and/or components described and illustrated in Figs. 1-14 may be combined in various ways without the need to include other features described and illustrated in Figs. 1-14, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-14, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-14 and such elements, features and/or components may not be discussed in detail herein with reference to each of Figs. 1-14. Similarly, all elements, features and/or components may not be labeled in each of Figs. 1-14, but reference numerals associated therewith may be utilized herein for consistency.

In Figs. 15-22, 23A-B, 24-28, 29A-B, 30-34 and 35A-B, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 15-22, 23A-B, 24-28, 29A-B, 30-34 and 35A-B and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

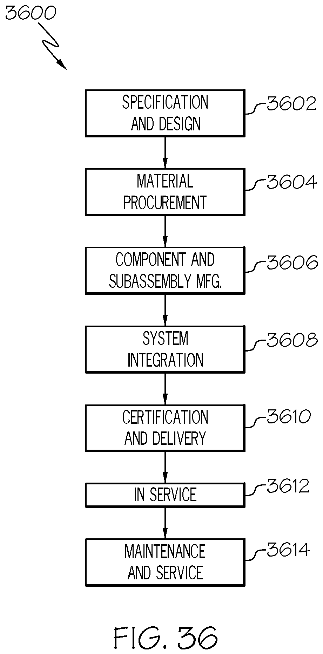

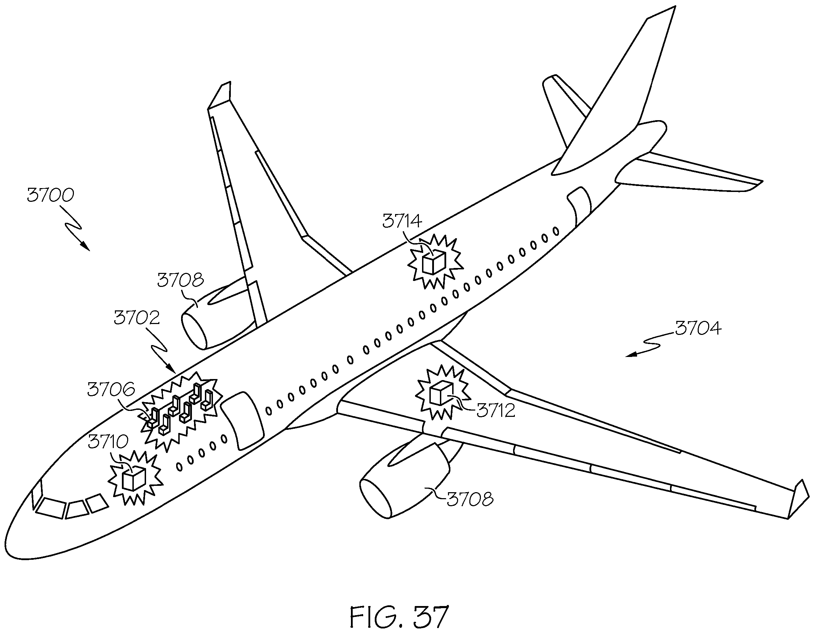

Examples of the subject matter disclosed herein may be described in the context of aircraft manufacturing and service method 3600 as shown in Fig. 36 and aircraft 3700 as shown in Fig. 37. In one or more examples, the disclosed wire carriers 100, end effectors 1000 and methods 1500 for transporting a wire 102 may be used in aircraft manufacturing. During pre-production, the service method 3600 may include specification and design (block 3602) of aircraft 3700 and material procurement (block 3604). During production, component and subassembly manufacturing (block 3606) and system integration (block 3608) of aircraft 3700 may take place. Thereafter, aircraft 3700 may go through certification and delivery (block 3610) to be placed in service (block 3612). While in service, aircraft 3700 may be scheduled for routine maintenance and service (block 3614). Routine maintenance and service may include modification, reconfiguration, refurbishment, etc. of one or more systems of aircraft 3700.

Each of the processes of the service method 3600 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 37, aircraft 3700 produced by the service method 3600 may include airframe 3702 with a plurality of high-level systems 3704 and interior 3706. Examples of high-level systems 3704 include one or more of propulsion system 3708, electrical system 3710, hydraulic system 3712 and environmental system 3714. Any number of other systems may be included. Although an aerospace example is shown, the principles disclosed herein may be applied to other industries, such as the automotive industry. Accordingly, in addition to aircraft 3700, the principles disclosed herein may apply to other vehicles, e.g., land vehicles, marine vehicles, space vehicles, etc.

The disclosed wire carriers 100, end effectors 1000 and methods 1500 for transporting a wire 102 may be employed during any one or more of the stages of the manufacturing and service method 3600. For example, components or subassemblies corresponding to component and subassembly manufacturing (block 3606) may be fabricated or manufactured in a manner similar to components or subassemblies produced while aircraft 3700 is in service (block 3612). Also, one or more examples of the system(s), method(s), or combination thereof may be utilized during production stages (block 3606 and block 3608), for example, by substantially expediting assembly of or reducing the cost of aircraft 3700. Similarly, one or more examples of the system or method realizations, or a combination thereof, may be utilized, for example and without limitation, while aircraft 3700 is in service (block 3612) and/or during maintenance and service (block 3614).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the wire carriers 100, end effectors 1000 and methods 1500 for transporting a wire 102 have been shown and described, modifications may occur to those skilled in the art upon reading the specification. The present application includes such modifications and is limited only by the scope of the claims.

Further, the present disclosure comprises aspects according to the following clauses.
Clause 1. A wire carrier 100 for transporting a wire 102, comprising:
   a support structure 104 comprising a front side 106 and a rear side 202;
   a first coil holder 108 secured to the front side 106 of the support structure 104 at a first location corresponding to a coil 110 of the wire 102 and a first position 112 on the coil 110 between a first end 114 of the wire 102 and a second end 116 of the wire 102;
   a first end holder 118 secured to the front side 106 of the support structure 104 at a second location corresponding to the first end 114 of the wire 102; and
   a second end holder 120 secured to the front side 106 of the support structure 104 at a third location corresponding to the second end 116.
Clause 2. The wire carrier of Clause 1 wherein the wire 102 comprises at least one of a single conductor, a twisted pair of conductors, a multiconductor cable, a shielded cable, an unjacketed cable, a coaxial cable, a matched-impedance cable and a fiber optic cable.
Clause 3. The wire carrier of Clause 1 wherein the first coil holder 108 is configured to at least temporarily retain the coil 110 of the wire 102.
Clause 4. The wire carrier of Clause 1 wherein the first end holder 118 is configured to at least temporarily retain the first end 114 of the wire 102.
Clause 5. The wire carrier of Clause 1 wherein the second end holder 120 is configured to at least temporarily retain the second end 116 of the wire 102.
Clause 6. The wire carrier of Clause 1 wherein the first location for the first coil holder 108 and the second location for the first end holder 118 define a first breakout length 302 between the first end 114 of the wire 102 and the coil 110 of the wire 102.
Clause 7. The wire carrier of Clause 1 wherein the first location for the first coil holder 108 and the third location for the second end holder 120 define a second breakout length 304 between the second end 116 of the wire 102 and the coil 110 of the wire 102.
Clause 8. The wire carrier of Clause 1 wherein the first end 114 of the wire 102 and the second end 116 of the wire 102 comprise terminated connections 122.
Clause 9. The wire carrier of Clause 8 wherein the terminated connections 122 comprise at least one of a pin, a jack, a male pin, a socket, a female pin, a receptacle, a contact, a lug and a connector.
Clause 10. The wire carrier of Clause 1, the first coil holder 108 comprising:
   a clamp 402 with an open state in which the clamp receives or releases the coil 110 of the wire 102 and a closed state in which the clamp grips the coil 110.
Clause 11. The wire carrier of Clause 10 wherein the clamp 402 comprises a loosely closed state in which the clamp 402 is closed enough that the coil 110 of the wire 102 is retained and open enough to permit the coil 110 to slide through the clamp 402.
Clause 12. The wire carrier of Clause 1, the first end holder 118 comprising:
   a clamp 502 with an open state in which the clamp 502 receives or releases the first end 114 of the wire 102 and a closed state in which the clamp 502 grips the first end 114.
Clause 13. The wire carrier of Clause 12, the clamp 502 comprising:
   a first keyhole 504 configured for engagement by a first key tool 1306 in conjunction with moving the clamp 502 to the open state, the clamp 502 is biased to the closed state and configured to enable the first key tool 1306 to hold the clamp 502 in the open state.
Clause 14. The wire carrier of Clause 1, the second end holder 120 comprising:
   a clamp 602 with an open state in which the clamp 602 receives or releases the second end 116 of the wire 102 and a closed state in which the clamp 602 grips the second end 116.
Clause 15. The wire carrier of Clause 14, the clamp 602 comprising:
   a second keyhole 604 configured for engagement by a second key tool 1406 in conjunction with moving the clamp 602 to the open state, the clamp 602 is biased to the closed state and configured to enable the second key tool 1406 to hold the clamp 602 in the open state.
Clause 16. The wire carrier of Clause 1, further comprising:
   a second coil holder 124 secured to the front side 106 of the support structure 104 at a fourth location corresponding to a second position 126 on the coil 110 of the wire 102 opposing the first position 112 on the coil 110.
Clause 17. The wire carrier of Clause 16 wherein the second coil holder 124 is configured to at least temporarily further retain the coil **110** of the wire 102.
Clause 18. The wire carrier of Clause 16, the second coil holder 124 comprising:
   a clamp 702 with an open state in which the clamp 702 receives or releases the coil 110 of the wire 102 and a closed state in which the clamp 702 grips the coil **110.**
Clause 19. The wire carrier of Clause 18 wherein the clamp 702 comprises a loosely closed state in which the clamp 702 is closed enough that the coil 110 of the wire 102 is retained and open enough to permit the coil **110** to slide through the clamp 702.
Clause 20. The wire carrier of Clause 16 wherein the first location for the first coil holder 108 and the fourth location for the second coil holder 124 define a central area 306 of the coil 110 of the wire 102 in relation to the support structure 104, a height dimension 308 for the coil 110 and a range of width dimensions 310 for the coil 110.
Clause 21. The wire carrier of Clause 1, further comprising:
   an interface member 128 secured to a top side 130 of the support structure 104 and extending outward for connection with a wire transport system 802 to suspend the wire carrier 100 from the wire transport system 802 in conjunction with transport of the wire 102 from a wire preparation system 804 to a wire assembly system 806.
Clause 22. The wire carrier of Clause 1, further comprising:
   a ferromagnetic member 204 secured to the rear side 202 of the support structure 104.
Clause 23. The wire carrier of Clause 22 wherein the ferromagnetic member 204 is configured to at least attract and hold the wire carrier 100 to an electromagnet 902 in a docking station 900 for the wire carrier 100 after the electromagnet 902 is activated and until the electromagnet 902 is deactivated.
Clause 24. The wire carrier of Clause 22, wherein the ferromagnetic member 204 comprises at least one of an iron material, a cobalt material, a steel material, a nickel material, a manganese material, a gadolinium material and a lodestone material.
Clause 25. The wire carrier of Clause 1, further comprising:
   a projecting member 206 secured to the rear side 202 of the support structure 104 and protruding from the rear side 202.
Clause 26. The wire carrier of Clause 25 wherein the projecting member 206 is configured to at least temporarily be held captive by a clamping device 904 at a docking station 900 for the wire carrier 100.
Clause 27. An end effector 1000 for transporting a wire 102, comprising:
   a support structure 1002 comprising a front side 1004 and a rear side 1102;
   a first retaining device 1006 secured to the front side 1004 of the support structure 1002 at a first location corresponding to a coil 110 of the wire 102 and a first position 112 on the coil 110 between a first end 114 of the wire 102 and a second end 116 of the wire 102;
   a second retaining device 1008 secured to the front side 1004 of the support structure 1002 at a second location corresponding to the first end 114 of the wire 102;
   a third retaining device 1010 secured to the front side 1004 of the support structure 1002 at a third location corresponding to the second end 116; and
   an interface member 1104 secured to the rear side 1102 of the support structure 1002 extending from the rear side 1102 for connection with an electro-mechanical manipulator 808, 810 in conjunction with control of the end effector 1000 during the transporting of the wire 102.
Clause 28. The end effector of Clause 27 wherein the wire 102 comprises at least one of a single conductor, a twisted pair of conductors, a multiconductor cable, a shielded cable, an unjacketed cable, a coaxial cable, a matched-impedance cable and a fiber optic cable.
Clause 29. The end effector of Clause 27 wherein the first retaining device 1006 is configured to at least temporarily retain the coil 110 of the wire 102.
Clause 30. The end effector of Clause 27 wherein the second retaining device 1008 is configured to at least temporarily retain the first end 114 of the wire 102.
Clause 31. The end effector of Clause 27 wherein the third retaining device 1010 is configured to at least temporarily retain the second end 116 of the wire 102.
Clause 32. The end effector of Clause 27 wherein the first location for the first retaining device 1006 and the second location for the second retaining device 1008 define a first breakout length 302 between the first end 114 of the wire 102 and the coil 110 of the wire 102.
Clause 33. The end effector of Clause 27 wherein the first location for the first retaining device 1006 and the third location for the third retaining device 1010 define a second breakout length 304 between the second end 116 of the wire 102 and the coil 110 of the wire 102.
Clause 34. The end effector of Clause 27 wherein the first end 114 of the wire 102 and the second end 116 of the wire 102 comprise terminated connections 122.
Clause 35. The end effector of Clause 34 wherein the terminated connections 122 comprise at least one of a pin, a jack, a male pin, a socket, a female pin, a receptacle, a contact, a lug and a connector.
Clause 36. The end effector of Clause 27 wherein the electro-mechanical manipulator 808, 810 comprises at least one of a robotic manipulator, a robotic arm, a collaborative robot, an automated mechanical manipulator, a semi-automated mechanical manipulator, a fixed-actuator tending robot and a semi-manual use robot.
Clause 37. The end effector of Clause 27, the first retaining device 1006 comprising:
   a clamp 1202 with an open state in which the clamp 1202 receives or releases the coil 110 of the wire 102 and a closed state in which the clamp 1202 grips the coil 110.
Clause 38. The end effector of Clause 37 wherein the clamp 1202 comprises a loosely closed state in which the clamp 1202 is closed enough that the coil 110 of the wire 102 is retained and open enough to permit the coil 110 of the wire 102 to slide through the clamp 1202.
Clause 39. The end effector of Clause 37, further comprising:
   a control assembly 1204 in operative communication with the electro-mechanical manipulator 808, 810 via the interface member 1104 to control the clamp 1202 in response to communications with the electro-mechanical manipulator 808, 810.
Clause 40. The end effector of Clause 39, the control assembly 1204 comprising:
   an actuator mechanically linked to the clamp 1202.
Clause 41. The end effector of Clause 40 wherein the actuator comprises at least one of a pneumatic actuator, an electric actuator, a rotary actuator, a linear actuator and a solenoid.
Clause 42. The end effector of Clause 27, the second retaining device 1008 comprising:
   a clamp 1302 with an open state in which the clamp 1302 receives or releases the first end 114 of the wire 102 and a closed state in which the clamp 1302 grips the first end 114.
Clause 43. The end effector of Clause 42, further comprising:
   a control assembly 1304 in operative communication with the electro-mechanical manipulator 808, 810 via the interface member 1104 to control the clamp 1302 in response to communications with the electro-mechanical manipulator 808, 810.
Clause 44. The end effector of Clause 43, the control assembly 1304 comprising:
   an actuator mechanically linked to the clamp 1302.
Clause 45. The end effector of Clause 44 wherein the actuator comprises at least one of a pneumatic actuator, an electric actuator, a rotary actuator, a linear actuator and a solenoid.
Clause 46. The end effector of Clause 27, further comprising:
   a first key assembly 1012 comprising a first key tool 1306 and configured to move the first key tool 1306 between a closed state and an open state, the first key assembly 1012 configured to engage the first key tool 1306 with a first keyhole 504 in a first end holder 118 of a wire carrier 100 in the closed state, the first end holder 118 configured to at least temporarily retain the first end 114 of the wire 102, the first key assembly 1012 configured to change the first end holder 118 to the open state in conjunction with the second retaining device 1008 placing the first end 114 in the first end holder 118 or picking the first end 114 from the first end holder 118.
Clause 47. The end effector of Clause 46, the first key assembly 1012 further comprising:
   a control assembly 1308 in operative communication with the electro-mechanical manipulator 808, 810 via the interface member 1104 to control the first key tool 1306 in response to communications with the electro-mechanical manipulator 808, 810.
Clause 48. The end effector of Clause 47, the control assembly 1308 comprising:
   an actuator mechanically linked to the first key tool 1306.
Clause 49. The end effector of Clause 48 wherein the actuator comprises at least one of a pneumatic actuator, an electric actuator, a rotary actuator, a linear actuator and a solenoid.
Clause 50. The end effector of Clause 27, the third retaining device 1010 comprising:
   a clamp 1402 with an open state in which the clamp 1402 receives or releases the second end 116 of the wire 102 and a closed state in which the clamp 1402 grips the second end 116.
Clause 51. The end effector of Clause 50, further comprising:
   a control assembly 1404 in operative communication with the electro-mechanical manipulator 808, 810 via the interface member 1104 to control the clamp 1402 in response to communications with the electro-mechanical manipulator 808, 810.
Clause 52. The end effector of Clause 51, the control assembly 1404 comprising:
   an actuator mechanically linked to the clamp 1402.
Clause 53. The end effector of Clause 52 wherein the actuator comprises at least one of a pneumatic actuator, an electric actuator, a rotary actuator, a linear actuator and a solenoid.
Clause 54. The end effector of Clause 27, further comprising:
   a second key assembly 1014 comprising a second key tool 1406 and configured to move the second key tool 1406 between a closed state and an open state, the second key assembly 1014 configured to engage the second key tool 1406 with a second keyhole 604 in a second end holder 120 of a wire carrier 100 in the closed state, the second end holder 120 configured to at least temporarily retain the second end 116 of the wire 102, the second key assembly 1014 configured to change the second end holder 120 to the open state in conjunction with the second retaining device 1008 placing the second end 116 in the second end holder 120 or picking the second end 116 from the second end holder 120.
Clause 55. The end effector of Clause 54, the second key assembly 1014 further comprising:
   a control assembly 1408 in operative communication with the electro-mechanical manipulator 808, 810 via the interface member 1104 to control the second key tool 1406 in response to communications with the electro-mechanical manipulator 808, 810.
Clause 56. The end effector of Clause 55, the control assembly 1408 comprising:
   an actuator mechanically linked to the second key tool 1406.
Clause 57. The end effector of Clause 56 wherein the actuator comprises at least one of a pneumatic actuator, an electric actuator, a rotary actuator, a linear actuator and a solenoid.
Clause 58. The end effector of Clause 27, further comprising:
   a fourth retaining device 1016 secured to the front side 1004 of the support structure 1002 at a fourth location corresponding to a second position 126 on the coil 110 of the wire 102 opposing the first position 112 on the coil 110.
Clause 59. The end effector of Clause 58 wherein the fourth retaining device 1016 is configured to at least temporarily further retain the coil 110 of the wire 102.
Clause 60. The end effector of Clause 58, the fourth retaining device 1016 comprising:
   a clamp 1206 with an open state in which the clamp 1206 receives or releases the coil 110 of the wire 102 and a closed state in which the clamp 1206 grips the coil 110.
Clause 61. The end effector of Clause 60 wherein the clamp 1206 comprises a loosely closed state in which the clamp 1206 is closed enough that the coil 110 of the wire 102 is retained and open enough to permit the coil 110 to slide through the clamp 1206.
Clause 62. The end effector of Clause 60, further comprising:
   a control assembly 1208 in operative communication with the electro-mechanical manipulator 808, 810 via the interface member 1104 to control the clamp 1206 in response to communications with the electro-mechanical manipulator 808, 810.
Clause 63. The end effector of Clause 62, the control assembly 1208 comprising:
   an actuator mechanically linked to the clamp 1206.
Clause 64. The end effector of Clause 63 wherein the actuator comprises at least one of a pneumatic actuator, an electric actuator, a rotary actuator, a linear actuator and a solenoid.
Clause 65. The end effector of Clause 58 wherein the first location for the first retaining device 1006 and the fourth location for the fourth retaining device 1016 define a central area 306 of the coil 110 of the wire 102 in relation to the support structure 1002, a height dimension 308 for the coil 110 and a range of width dimensions 310 for the coil 110.
Clause 66. The end effector of Clause 27 wherein, in conjunction with the control by the electro-mechanical manipulator 808, 810 via the interface member 1104, the end effector 1000 is configured to pick the coil 110 of the wire 102 with the first end 114 and the second end 116 at a predetermined location in a wire preparation system 804 and place the coil 110 with the first end 114 and the second end 116 on a wire carrier 100 suspended from a wire transport system 802 in conjunction with transport of the wire 102 to a wire assembly system 806.
Clause 67. The end effector of Clause 27 wherein, in conjunction with the control by the electro-mechanical manipulator 808, 810 via the interface member 1104, the end effector 1000 is configured to receive the coil 110 of the wire 102 with the first end 114 and the second end 116 from a wire preparation system 804 at a predetermined location and place the coil 110 with the first end 114 and the second end 116 on a wire carrier 100 suspended from a wire transport system 802 in conjunction with transport of the wire 102 to a wire assembly system 806.
Clause 68. The end effector of Clause 27 wherein, in conjunction with the control by the electro-mechanical manipulator 808, 810 via the interface member 1104, the end effector 1000 is configured to pick the coil 110 of the wire 102 with the first end 114 and the second end 116 from a wire carrier 100 suspended from a wire transport system 802 and place the coil 110 with the first end 114 and the second end 116 at a predetermined location in a wire assembly system 806.
Clause 69. A method 1500 for transporting a wire 102, comprising:
   transporting 1502 the wire 102 from a wire preparation system 804 to a wire assembly system 806 using a wire carrier 100 on a wire transport system 802, the wire 102 comprising a first end 114 and a second end 116, the wire preparation system 804 having formed the wire 102 in a coil 110 with a first breakout length 302 between the coil 110 of the wire 102 and the first end 114 and a second breakout length 304 between the coil 110 and the second end 116; and
   transferring 1504 the coil 110 with the first end 114 and the second end 116 from the wire carrier 100 on the wire transport system 802 to the wire assembly system 806 using a first electro-mechanical manipulator 808.
Clause 70. The method of Clause 69, the transporting 1502 of the wire 102 comprising:
   retaining 1602 the coil 110 of the wire 102 at a first location on the wire carrier 100 using a first coil holder 108, the first location corresponding to a first position 112 on the coil 110 between the first end 114 and the second end 116;
   retaining 1604 the first end 114 of the wire 102 at a second location on the wire carrier 100 using a first end holder 118, the second location corresponding to the first end 114 and the first breakout length 302 between the coil 110 and the first end 114; and
   retaining 1606 the second end 116 of the wire 102 at a third location on the wire carrier 100 using a second end holder 120, the third location corresponding to the second end 116 and the second breakout length 304 between the coil 110 and the second end 116.
Clause 71. The method of Clause 70 wherein the first coil holder 108 comprises a clamp 402 with an open state in which the clamp receives the coil 110 of the wire 102 and a closed state in which the clamp 402 grips the coil 110, the retaining 1602 of the coil 110 of the wire 102 at the first location comprising:
   receiving 1702 the coil 110 of the wire 102 in the clamp 402 with the clamp 402 in the open state;
   switching 1704 the clamp 402 from the open state to the closed state to retain the coil 110; and
   gripping 1706 the coil 110 in the clamp 402 with the clamp 402 in the closed state.
Clause 72. The method of Clause 71 wherein the clamp 402 comprises a loosely closed state in which the clamp 402 is closed enough that the coil 110 of the wire 102 is retained and open enough to permit the coil 110 to slide through the clamp 402, the retaining 1602 of the coil 110 of the wire 102 at the first location further comprising:
   switching 1708 the clamp 402 from the open state to the loosely closed state; and
   sliding 1710 the coil 110 of the wire 102 through the clamp 402 such that the first breakout length 302 and the second breakout length 304 are approximately equal prior to the switching 1704 of the clamp 402 to the closed state.
Clause 73. The method of Clause 70 wherein the first end holder 118 comprises a clamp 502 with an open state in which the clamp 502 receives the first end 114 of the wire 102 and a closed state in which the clamp 502 grips the first end 114, the retaining 1606 of the first end 114 of the wire 102 at the second location comprising:
   receiving 1802 the first end 114 of the wire 102 in the clamp 502 with the clamp 502 in the open state;
   switching 1804 the clamp 502 from the open state to the closed state to retain the first end 114; and
   gripping 1806 the first end 114 in the clamp 502 with the clamp 502 in the closed state.
Clause 74. The method of Clause 73 wherein the clamp 502 comprises a first keyhole 504 configured for engagement by a first key tool 1306 in conjunction with moving the clamp 502 to the open state and back to the closed state, the clamp 502 is biased to the closed state and configured to enable the first key tool 1306 to hold the clamp 502 in the open state, the retaining 1606 of the first end 114 of the wire 102 at the second location further comprising:
   engaging 1808 the first keyhole 504 with the first key tool 1306;
   moving 1810 the clamp 502 from the closed state to the open state using the first key tool 1306 to prepare for receiving 1802 the first end 114 of the wire 102 in the clamp 502; and
   permitting 1812 the clamp 502 to move from the open state to the closed state in response to corresponding movement of the first key tool 1306.
Clause 75. The method of Clause 70 wherein the second end holder 120 comprises a clamp 602 with an open state in which the clamp 602 receives the second end 116 of the wire 102 and a closed state in which the clamp grips the second end 116, the retaining 1606 of the second end 116 of the wire 102 at the third location comprising:
   receiving 1902 the second end 116 of the wire 102 in the clamp 602 with the clamp 602 in the open state;
   switching 1904 the clamp 602 from the open state to the closed state to retain the second end 116; and
   gripping 1906 the second end 116 in the clamp 602 with the clamp 602 in the closed state.
Clause 76. The method of Clause 75 wherein the clamp 602 comprises a second keyhole 604 configured for engagement by a second key tool 1406 in conjunction with moving the clamp 602 to the open state and back to the closed state, the clamp 602 is biased to the closed state and configured to enable the second key tool 1406 to hold the clamp 602 in the open state, the retaining 1606 of the second end 116 of the wire 102 at the third location further comprising:
   engaging 1908 the second keyhole 604 with the second key tool 1406;
   moving 1910 the clamp 602 from the closed state to the open state using the second key tool 1406 to prepare for receiving 1902 the second end 116 of the wire 102 in the clamp; and
   permitting 1912 the clamp 602 to move from the open state to the closed state in response to corresponding movement of the second key tool 1406.
Clause 77. The method of Clause 70, the transporting 1502 of the wire 102 further comprising:
   retaining 2002 the coil 110 of the wire 102 at a fourth location on the wire carrier 100 using a second coil holder 124, the fourth location corresponding to a second position 126 on the coil 110 opposing the first position 112 on the coil 110.
Clause 78. The method of Clause 77 wherein the second coil holder 124 comprises a clamp 702 with an open state in which the clamp 702 receives the coil 110 of the wire 102 and a closed state in which the clamp 702 grips the coil 110, the retaining 2002 of the coil 110 of the wire 102 at the fourth location comprising:
   receiving 2102 the coil 110 of the wire 102 in the clamp 702 with the clamp 702 in the open state;
   switching 2104 the clamp 702 from the open state to the closed state to retain the coil 110; and
   gripping 2106 the coil 110 in the clamp 702 with the clamp 702 in the closed state.
Clause 79. The method of Clause 78 wherein the clamp 702 comprises a loosely closed state in which the clamp 702 is closed enough that the coil 110 of the wire 102 is retained and open enough to permit the coil 110 to slide through the clamp 702, the retaining 2002 of the coil 110 of the wire 102 at the fourth location further comprising:
   switching 2108 the clamp 702 from the open state to the loosely closed state; and
   sliding 2110 the coil 110 of the wire 102 through the clamp 702 such that the first breakout length 302 and the second breakout length 304 are approximately equal prior to the switching 2104 of the clamp 702 to the closed state.
Clause 80. The method of Clause 69, the transferring 1504 of the coil 110 comprising:
   picking 2202 the coil 110 of the wire 102 with the first end 114 and the second end 116 from the wire carrier 100 on the wire transport system 802 using an end effector 1000 on the first electro-mechanical manipulator 808; and
   placing 2204 the coil 110 of the wire 102 with the first end 114 and the second end 116 at a predetermined location at the wire assembly system 806 using the end effector 1000.
Clause 81. The method of Clause 80, the picking 2202 of the coil 110 comprising:
   opening 2302 a first retaining device 1006, a second retaining device 1008 and a third retaining device 1010 on the end effector 1000;
   moving 2304 the end effector 1000 proximate the wire carrier 100 to cause the first retaining device 1006 to proximate a first coil holder 108 of the wire carrier 100, to cause the second retaining device 1008 to proximate a first end holder 118 of the wire carrier 100 and to cause the third retaining device 1010 to proximate a second end holder 120 of the wire carrier 100;
   picking 2306 the coil 110 of the wire 102 from the first coil holder 108 using the first retaining device 1006 of the end effector 1000;
   picking 2308 the first end 114 of the wire 102 from the first end holder 118 using the second retaining device 1008 of the end effector 1000;
   picking 2310 the second end 116 of the wire 102 from the second end holder 120 using the third retaining device 1010 of the end effector 1000;
   closing 2312 the second retaining device 1008 to grip the first end 114 of the wire 102 and the third retaining device 1010 to grip the second end 116 of the wire 102; and
   closing 2314 the first retaining device 1006 to grip the coil 110 of the wire 102.
Clause 82. The method of Clause 81, the picking 2202 of the coil 110 further comprising:
   partially closing 2316 the first retaining device 1006 to retain the coil 110 of the wire 102 and to permit the coil 110 of the wire 102 to slide through the first retaining device 1006; and
   sliding 2318 the coil 110 of the wire 102 through the first retaining device 1006 such that the first breakout length 302 and the second breakout length 304 are approximately equal prior to the closing 2314 of the first retaining device 1006.
Clause 83. The method of Clause 81, the picking 2308 of the first end 114 of the wire 102 comprising:
   engaging 2402 a first key tool 1306 of the end effector 1000 with a first keyhole 504 in the first end holder 118 on the wire carrier 100; and
   moving 2404 the first key tool 1306 to open the first end holder 118 prior to the picking 2308 of the first end 114 of the wire 102.
Clause 84. The method of Clause 81, the picking 2310 of the second end 116 of the wire 102 comprising:
   engaging 2502 a second key tool 1406 of the end effector 1000 with a second keyhole 604 in the second end holder 120 on the wire carrier 100; and
   moving 2504 the second key tool 1406 to open the second end holder 120 prior to the picking 2310 of the second end 116 of the wire 102.
Clause 85. The method of Clause 81, the picking 2202 of the coil 110 further comprising:
   opening 2602 a fourth retaining device 1016 on the end effector 1000, wherein the moving 2304 of the end effector 1000 proximate the wire carrier 100 caused the fourth retaining device 1016 to proximate a second coil holder 124 of the wire carrier 100;
   picking 2604 the coil 110 of the wire 102 from the second coil holder 124 using the fourth retaining device 1016 of the end effector 1000; and
   closing 2606 the fourth retaining device 1016 to further grip the coil 110 of the wire 102.
Clause 86. The method of Clause 80, the placing 2204 of the coil 110 comprising:
   moving 2702 the end effector 1000 proximate the predetermined location at the wire assembly system 806 to cause a first retaining device 1006, a second retaining device 1008 and a third retaining device 1010 of the end effector 1000 to proximate the predetermined location;
   opening 2704 the first retaining device 1006, the second retaining device 1008 and the third retaining device 1010 on the end effector 1000;
   placing 2706 the coil 110 of the wire 102 from the first retaining device 1006 of the end effector 1000 at the predetermined location;
   placing 2708 the first end 114 of the wire 102 from the second retaining device 1008 of the end effector 1000 at the predetermined location; and
   placing 2710 the second end 116 of the wire 102 from the third retaining device 1010 of the end effector 1000 at the predetermined location.
Clause 87. The method of Clause 86, the placing 2204 of the coil 110 further comprising:
   opening 2712 a fourth retaining device 1016 on the end effector 1000, wherein the moving 2702 of the end effector 1000 proximate the predetermined location at the wire assembly system 806 caused the fourth retaining device 1016 on the end effector 1000 to proximate the predetermined location; and
   placing 2714 the coil 110 of the wire 102 from the fourth retaining device 1016 of the end effector 1000 at the predetermined location.
Clause 88. The method 1500 of Clause 69, further comprising:
   transferring 1506 the coil 110 of the wire 102 with the first end 114 and the second end 116 from the wire preparation system 804 to the wire carrier 100 on the wire transport system 802 using a second electro-mechanical manipulator 810.
Clause 89. The method of Clause 88, the transferring 1506 of the coil 110 comprising:
   picking 2802 the coil 110 of the wire 102 with the first end 114 and the second end 116 from a predetermined location at the wire preparation system 804 using an end effector 1000 on the second electro-mechanical manipulator 810; and
   placing 2804 the coil 110 of the wire 102 with the first end 114 and the second end 116 on the wire carrier 100 of the wire transport system 802 using the end effector 1000.
Clause 90. The method of Clause 89, the picking 2802 of the coil 110 comprising:
   opening 2902 a first retaining device 1006, a second retaining device 1008 and a third retaining device 1010 on the end effector 1000;
   moving 2904 the end effector 1000 proximate the predetermined location at the wire preparation system 804 to cause the first retaining device 1006 to proximate the coil 110 of the wire 102, to cause the second retaining device 1008 to proximate the first end 114 of the wire 102 and to cause the third retaining device 1010 to proximate the second end 116 of the wire 102;
   picking 2906 the coil 110 of the wire 102 from the predetermined location using the first retaining device 1006 of the end effector 1000;
   picking 2908 the first end 114 of the wire 102 from the predetermined location using the second retaining device 1008 of the end effector 1000;
   picking 2910 the second end 116 of the wire 102 from the predetermined location using the third retaining device 1010 of the end effector 1000;
   closing 2912 the second retaining device 1008 to grip the first end 114 of the wire 102 and the third retaining device 1010 to grip the second end 116 of the wire 102; and
   closing 2914 the first retaining device 1006 to grip the coil 110 of the wire 102.
Clause 91. The method of Clause 90, the picking 2802 of the coil 110 further comprising:
   partially closing 2916 the first retaining device 1006 to retain the coil 110 of the wire 102 and to permit the coil 110 of the wire 102 to slide through the first retaining device 1006; and
   sliding 2918 the coil 110 of the wire 102 through the first retaining device 1006 such that the first breakout length 302 and the second breakout length 304 are approximately equal prior to the closing 2814 of the first retaining device 1006.
Clause 92. The method of Clause 90, the picking 2802 of the coil 110 further comprising:
   opening 2920 a fourth retaining device 1016 on the end effector 1000, wherein the moving 2904 of the end effector 1000 proximate the predetermined location at the wire preparation system 804 caused the fourth retaining device 1016 to proximate the coil 110 of the wire 102;
   picking 2922 the coil 110 of the wire 102 from the predetermined location using the fourth retaining device 1016 of the end effector 1000; and
   closing 2924 the fourth retaining device 1016 to further grip the coil 110 of the wire 102.
Clause 93. The method of Clause 89, the placing 2804 of the coil 110 comprising:
   moving 3002 the end effector 1000 proximate the wire carrier 100 on the wire transport system 802 to cause a first retaining device 1006 of the end effector 1000 to proximate a first coil holder 108 of the wire carrier 100, to cause a second retaining device 1008 of the end effector 1000 to proximate a first end holder 118 of the wire carrier 100 and to cause a third retaining device 1010 of the end effector 1000 to proximate a second end holder 120 of the wire carrier 100;
   opening 3004 the first retaining device 1006, the second retaining device 1008 and the third retaining device 1010 on the end effector 1000;
   placing 3006 the coil 110 of the wire 102 in the first coil holder 108 from the first retaining device 1006 of the end effector 1000;
   placing 3008 the first end 114 of the wire 102 in the first end holder 118 from the second retaining device 1008 of the end effector 1000; and
   placing 3010 the second end 116 of the wire 102 in the second end holder 120 from the third retaining device 1010 of the end effector 1000.
Clause 94. The method of Clause 93, the placing 3008 of the first end 114 of the wire 102 comprising:
   engaging 3102 a first key tool 1306 of the end effector 1000 with a first keyhole 504 in the first end holder 118 on the wire carrier 100; and
   moving 3104 the first key tool 1306 to open the first end holder 118 prior to the placing 3008 of the first end 114 of the wire 102.
Clause 95. The method of Clause 93, the placing 3010 of the second end 116 of the wire 102 comprising:
   engaging 3202 a second key tool 1406 of the end effector 1000 with a second keyhole 604 in the second end holder 120 on the wire carrier 100; and
   moving 3204 the second key tool 1406 to open the second end holder 120 prior to the placing 3010 of the second end 116 of the wire 102.
Clause 96. The method of Clause 93, the placing 2804 of the coil 110 further comprising:
   opening 3302 a fourth retaining device 1016 on the end effector 1000, wherein the moving 3002 of the end effector 1000 proximate the wire carrier 100 on the wire transport system 802 caused the fourth retaining device 1016 of the end effector 1000 to proximate a second coil holder 124 of the wire carrier 100; and
   placing 3304 the coil 110 of the wire 102 in the second coil holder 124 from the fourth retaining device 1016 of the end effector 1000.
Clause 97. The method of Clause 88, the transferring 1506 of the coil 110 comprising:
   receiving 3402 the coil 110 of the wire 102 with the first end 114 and the second end 116 from the wire preparation system 804 at a predetermined location using an end effector 1000 on the second electro-mechanical manipulator 810; and
   placing 3404 the coil 110 of the wire 102 with the first end 114 and the second end 116 on the wire carrier 100 of the wire transport system 802 using the end effector 1000.
Clause 98. The method of Clause 97, the receiving 3402 of the coil 110 comprising:
   opening 3502 a first retaining device 1006, a second retaining device 1008 and a third retaining device 1010 on the end effector 1000;
   moving 3504 the end effector 1000 proximate the predetermined location at the wire preparation system 804 to cause the first retaining device 1006 to proximate the coil 110 of the wire 102, to cause the second retaining device 1008 to proximate the first end 114 of the wire 102 and to cause the third retaining device 1010 to proximate the second end 116 of the wire 102;
   receiving 3506 the coil 110 of the wire 102 from the predetermined location using the first retaining device 1006 of the end effector 1000;
   receiving 3508 the first end 114 of the wire 102 from the predetermined location using the second retaining device 1008 of the end effector 1000;
   receiving 3510 the second end 116 of the wire 102 from the predetermined location using the third retaining device 1010 of the end effector 1000;
   closing 3512 the second retaining device 1008 to grip the first end 114 of the wire 102 and the third retaining device 1010 to grip the second end 116 of the wire 102; and
   closing 3514 the first retaining device 1006 to grip the coil 110 of the wire 102.
Clause 99. The method of Clause 98, the receiving 3402 of the coil 110 further comprising:
   partially closing 3516 the first retaining device 1006 to retain the coil 110 of the wire 102 and to permit the coil 110 of the wire 102 to slide through the first retaining device 1006; and
   sliding 3518 the coil 110 of the wire 102 through the first retaining device 1006 such that the first breakout length 302 and the second breakout length 304 are approximately equal prior to the closing 3514 of the first retaining device 1006.
Clause 100. The method of Clause 98, the receiving 3402 of the coil 110 further comprising:
   opening 3520 a fourth retaining device 1016 on the end effector 1000, wherein the moving 3504 of the end effector 1000 proximate the predetermined location at the wire preparation system 804 caused the fourth retaining device 1016 to proximate the coil 110 of the wire 102;
   picking 3522 the coil 110 of the wire 102 from the predetermined location using the fourth retaining device 1016 of the end effector 1000; and
   closing 3524 the fourth retaining device 1016 to further grip the coil 110 of the wire 102.

## Claims

1. A wire carrier (100) for transporting a wire (102), comprising:
a support structure (104) comprising a front side (106) and a rear side (202);
a first coil holder (108) secured to the front side (106) of the support structure (104) at a first location corresponding to a coil (110) of the wire (102) and a first position (112) on the coil (110) between a first end (114) of the wire (102) and a second end (116) of the wire (102);
a first end holder (118) secured to the front side (106) of the support structure (104) at a second location corresponding to the first end (114) of the wire (102); and
a second end holder (120) secured to the front side (106) of the support structure (104) at a third location corresponding to the second end (116).

2. The wire carrier of Claim 1 wherein the first coil holder (108) is configured to at least temporarily retain the coil (110) of the wire (102).

3. The wire carrier of any one of the preceding Claims, wherein the first location for the first coil holder (108) and the second location for the first end holder (118) define a first breakout length (302) between the first end (114) of the wire (102) and the coil (110) of the wire (102).

4. The wire carrier of any one of Claims 1-2, wherein the first location for the first coil holder (108) and the third location for the second end holder (120) define a second breakout length (304) between the second end (116) of the wire (102) and the coil (110) of the wire (102).

5. The wire carrier of any one of the preceding Claims, the first coil holder (108) either comprising:
a clamp (402) with an open state in which the clamp receives or releases the coil (110) of the wire (102) and a closed state in which the clamp grips the coil (110); or
a clamp (502) with an open state in which the clamp (502) receives or releases the first end (114) of the wire (102) and a closed state in which the clamp (502) grips the first end (114).

6. The wire carrier of Claim 5, the clamp (502) comprising:
a first keyhole (504) configured for engagement by a first key tool (1306) in conjunction with moving the clamp (502) to the open state, the clamp (502) is biased to the closed state and configured to enable the first key tool (1306) to hold the clamp (502) in the open state.

7. The wire carrier of any one of the preceding Claims, the second end holder (120) comprising:
a clamp (602) with an open state in which the clamp (602) receives or releases the second end (116) of the wire (102) and a closed state in which the clamp (602) grips the second end (116).

8. The wire carrier of any one of the preceding Claims, further comprising:
a second coil holder (124) secured to the front side (106) of the support structure (104) at a fourth location corresponding to a second position (126) on the coil (110) of the wire (102) opposing the first position (112) on the coil (110).

9. The wire carrier of Claim 8, the second coil holder (124) comprising:
a clamp (702) with an open state in which the clamp (702) receives or releases the coil (110) of the wire (102) and a closed state in which the clamp (702) grips the coil (110).

10. The wire carrier of any one of Claims 8-9, wherein the first location for the first coil holder (108) and the fourth location for the second coil holder (124) define a central area (306) of the coil (110) of the wire (102) in relation to the support structure (104), a height dimension (308) for the coil (110) and a range of width dimensions (310) for the coil (110).

11. The wire carrier of any one of the preceding Claims, further comprising:
an interface member (128) secured to a top side (130) of the support structure (104) and extending outward for connection with a wire transport system (802) to suspend the wire carrier (100) from the wire transport system (802) in conjunction with transport of the wire (102) from a wire preparation system (804) to a wire assembly system (806).

12. The wire carrier of any one of the preceding Claims, further comprising:
a ferromagnetic member (204) secured to the rear side (202) of the support structure (104).

13. The wire carrier of any one of the preceding Claims, further comprising:
a projecting member (206) secured to the rear side (202) of the support structure (104) and protruding from the rear side (202).

14. An end effector (1000) for transporting a wire (102), comprising:
a support structure (1002) comprising a front side (1004) and a rear side (1102);
a first retaining device (1006) secured to the front side (1004) of the support structure (1002) at a first location corresponding to a coil (110) of the wire (102) and a first position (112) on the coil (110) between a first end (114) of the wire (102) and a second end (116) of the wire (102);
a second retaining device (1008) secured to the front side (1004) of the support structure (1002) at a second location corresponding to the first end (114) of the wire (102);
a third retaining device (1010) secured to the front side (1004) of the support structure (1002) at a third location corresponding to the second end (116); and
an interface member (1104) secured to the rear side (1102) of the support structure (1002) extending from the rear side (1102) for connection with an electro-mechanical manipulator (808, 810) in conjunction with control of the end effector (1000) during the transporting of the wire (102).

15. A method (1500) for transporting a wire (102), comprising:
transporting (1502) the wire (102) from a wire preparation system (804) to a wire assembly system (806) using a wire carrier (100) on a wire transport system (802), the wire (102) comprising a first end (114) and a second end (116), the wire preparation system (804) having formed the wire (102) in a coil (110) with a first breakout length (302) between the coil (110) of the wire (102) and the first end (114) and a second breakout length (304) between the coil (110) and the second end (116); and
transferring (1504) the coil (110) with the first end (114) and the second end (116) from the wire carrier (100) on the wire transport system (802) to the wire assembly system (806) using a first electro-mechanical manipulator (808).
